# EUROPÄISCHE PATENTSCHRIFT

(11) **EP 3 491 908 B1**
(45) Veröffentlichungstag und Bekanntmachung des Hinweises auf die Patenterteilung: **03.03.2021**
(21) Anmeldenummer: 18210080.0
(22) Anmeldetag: 04.12.2018
(51) Int. Cl.: A01F 15/08, A01D 75/28, B60G 5/06, B60G 21/067, B60G 21/00, B60G 21/02, A01F 15/07

(54) **LANDWIRTSCHAFTLICHE ERNTE- UND/ODER BODENBEARBEITUNGSMASCHINE**
AGRICULTURAL HARVESTING AND/OR SOIL WORKING MACHINE
MOISSONNEUSE ET/OU MACHINE DE TRAITEMENT DU SOL AGRICOLE

(30) Priorität: 04.12.2017 DE 202017107372 U
(43) Veröffentlichungstag der Anmeldung: 05.06.2019
(73) Patentinhaber: PÖTTINGER Landtechnik GmbH, 4710 Grieskirchen (AT)
(72) Erfinder: Kleesadl, Johann, 4710 Grieskirchen (AT); Prechtl, Wolfgang, 4710 Grieskirchen (AT)
(74) Vertreter: Thoma, Michael

(56) Entgegenhaltungen:
- EP-A1- 3 069 598
- EP-A1- 3 069 600
- DE-A1-102015 006 221
- US-A- 2 918 292

## Beschreibung

Die vorliegende Erfindung betrifft eine landwirtschaftliche Ernte- und/oder Bodenbearbeitungsmaschine mit einem Maschinenrahmen, der durch zumindest ein Bogey-Fahrwerk am Boden abgestützt ist, das zwei jeweils an einem Achsträger befestigte Radachsen aufweist, der zusammen mit den Radachsen nach Art einer Wippe um eine Schwenkachse schwenkbar gelagert ist, wobei der Achsträger zur Höhenverstellung des Bogey-Fahrwerks in zumindest zwei Achsträgerteile geteilt ist, die relativ zueinander schwenkbar sind.

Landwirtschaftliche Ernte- und/oder Bodenbearbeitungsmaschinen wie Ballenpressen oder Ladewagen mit einer Aufnahmevorrichtung zum Aufnehmen von Erntegut vom Boden werden gerne mit Bogey-Fahrwerken ausgestattet, da solche Bogey-Fahrwerke einerseits auch bei welligem Gelände eine günstige Bodenanpassung mit gleichmäßiger Lastverteilung auf beiden Achsen ermöglicht und zum anderen in einfacher Weise eine Höhenverstellung des Fahrwerks ermöglicht. Dabei kann die Höhenverstellung an den linken und rechten Fahrspuren auch unabhängig bzw. individuell erfolgen, sodass in einfacher Weise ein Hangausgleich erreicht werden kann, das heißt beim Parallelfahren am Hang quer zur Hangneigung kann das untere Bogey-Fahrwerk höher und/oder das hangaufwärts liegende Fahrwerk tiefer gestellt werden, sodass der Maschinenaufbau näherungsweise horizontal bzw. zumindest weniger stark geneigt und ein gewisser Neigungsausgleich erzielt wird. Bei den genannten Ballenpressen kann dies sinnvoll sein, um die Übergabe eines fertig gewickelten Ballens aus der Presskammer an die Wickelvorrichtung zu erleichtern. Beim Ladewagen kann dies sinnvoll sein, um beim Verteilen des Ernteguts im Speicherraum, beispielsweise durch Anschalten des Kratzbodens, eine gleichmäßige Futterverteilung zu erzielen.

Solche Bogey-Fahrwerke können aber auch an anderen landwirtschaftlichen Maschinentypen sinnvoll sein, beispielsweise an Sämaschinen, Bodenbearbeitungsgeräten wie Pflüge, Grubber, Eggen oder Bodenbearbeitungskombinationen, sowie Heuwerbungsmaschinen wie Schwader und Zetter oder anderen landwirtschaftlichen Ernte- oder Bodenbearbeitungsmaschinen, insbesondere wenn diese als Anbaugeräte zum Anbau an einen Schlepper ausgebildet sind.

Die Schriften EP 3 069 598 A1, EP 30 69 600 A1 und DE 10 2015 006 221 A1 zeigen jeweils beispielsweise eine Ballenpresse, deren Maschinenrahmen mit einem Bogey-Fahrwerk am Boden abgestützt ist, wobei der wippenartige Achsträger, an dem die beiden Radachsen angebracht sind, geteilt ausgebildet ist und zwei zueinander verschwenkbare Schenkel aufweist, um das Bogey-Fahrwerk höhenverstellen zu können. Dabei sind die beiden Schenkel des geteilten Achsträgers an einer gemeinsamen Schwenkachse angelenkt und durch einen Stellaktor miteinander verbunden, sodass durch Verlängern bzw. Verkürzen des Stellaktors verschiedene Winkelstellungen der Achsträgerschenkel zueinander eingestellt werden können, sodass sich das Bogey-Fahrwerk höhenverstellt. Bei relativ zueinander eingefrorenen Achsträgerschenkeln kann der gesamte, dann starre Achsträger zusammen mit dem Stellaktor um die Schwenkachse auf und nieder wippen, um in an sich bekannter Weise den Bogey-Fahrbetrieb zu realisieren. Ein ähnliches Bogey-Fahrwerk für einen Bohnenernter zeigt die Schrift US 2918292 A.

In bestimmten Fahrsituationen bzw. Geländeformen kann ein solches Bogey-Fahrwerk jedoch auch hinderlich bzw. die genannte Höhenverstellung nicht ausreichend sein. Wird die Maschine beispielsweise über eine knickartige Hangkante ge fahren, kann die Maschine insgesamt ungewollt absacken, wenn eine der beiden Radachsen über die Hangkante hinaus auf die abschüssige Flanke gefahren ist, obwohl die andere Radachse an sich noch auf dem oberen Abschnitt der Hangkante platziert wäre. Hiervon abgesehen kann es beim Überfahren kleinerer Riefen bzw. kleinerer Querrinnen auch zu einem unruhigen Fahrverhalten mit vertikalen Stößen bzw. Vibrationen auf den Maschinenaufbau kommen. Während bei einer Zwillingsachse ohne Bogey-Funktion die noch nicht in eine Querrinne eingefahrene Achse den Aufbau weiter abstützen würde, sodass die andere Radachse sozusagen über die Querrille hinwegschweben kann, bzw. zumindest nicht voll in die Querrille eintaucht, kommt es bei einem Bogey-Fahrwerk aufgrund der gegenläufigen Wippbarkeit der Radachsen dazu, dass sich beim Eintauchen der einen Radachse in eine Querrille die andere Radachse einfach noch oben wegbewegt, sodass nacheinander beide Radachsen in die Querrille eintauchen. Ferner können Bogey-Fahrwerke auch bei höheren Fahrgeschwindigkeiten, beispielsweise im Straßentransportbetrieb, zu einer unerwünschten Beeinflussung des Fahrverhaltens beitragen.

Hiervon ausgehend liegt der vorliegenden Erfindung die Aufgabe zugrunde, eine verbesserte landwirtschaftliche Ernte- und/oder Bodenbearbeitungsmaschine zu schaffen, die Nachteile des Standes der Technik vermeidet und letzteren in vorteilhafter Weise weiterbildet. Insbesondere soll das den Maschinenrahmen am Boden abstützende Fahrwerk weiterentwickelt werden, um die Vorteile eines Bogey-Fahrwerks beizubehalten, dessen Nachteile jedoch zu eliminieren bzw. zumindest abzuschwächen, wobei trotz Höhenverstellbarkeit ein möglichst einfacher Aufbau des Fahrwerks mit wenig Teilen beibehalten werden soll.

Erfindungsgemäß wird die genannte Aufgabe durch eine landwirtschaftliche Ernte- und/oder Bodenbearbeitungsmaschine gemäß Anspruch 1 gelöst. Bevorzugte Ausgestaltungen der Erfindung sind Gegenstand der abhängigen Ansprüche.

Es wird also vorgeschlagen, zusätzlich zur Höhenverstelleinrichtung, die die Winkelstellung der Achsträgerschenkel relativ zueinander verstellen kann, auch eine Einstellvorrichtung zum variablen Einstellen einer festen, vorgebbaren Winkelstellung des Achsträgers insgesamt bezüglich der Schwenkachse vorzusehen, um eine bestimmte Schwenkstellung des Achsträgers im Sinne einer absoluten Winkelstellung des Achsträgers relativ zum Maschinenrahmen vorgeben zu können. Erfindungsgemäß sind zumindest zwei Druckmittelaktoren zum Einstellen der Relativstellung der Achsträgerteile zueinander und zum Einstellen der Winkelstellung des Achsträgers bezüglich der Schwenkachse relativ zum Maschinenrahmen vorgesehen. Die zumindest zwei Druckmittelaktoren sind dabei derart angeordnet und ausgebildet, dass sie einerseits einen normalen Bogey-Fahrbetrieb mit gegenläufig auf und ab wippenden Radachsen ermöglichen, andererseits aber auch einen Fahrbetrieb mit sozusagen eingefrorener Schwenkstellung des Achsträgers bzw. das Feststellen zumindest eines Achsträgerteils bezüglich der Schwenkachse ermöglichen, und gleichermaßen eine Höhenverstellung des Bogey-Fahrwerks bewirken können.

Hierdurch kann mit nur zwei Druckaktoren eine Vielseitigkeit der Fahrwerksfunktionen, verschiedene Hebe- und Senkszenarien und eine bessere Anpassung an verschiedene Fahrsituationen erzielt werden.

In Weiterbildung der Erfindung können die genannten zumindest zwei Druckmittelaktoren jeweils einerseits an einem der Achsträgerteile und andererseits an einem Schwenkachsträger angelenkt sein, gegenüber dem das Bogey-Fahrwerk wippbar ist. Der genannte Schwenkachsträger kann beispielsweise ein mit dem Maschinenrahmen starr verbundener Fahrwerks-Aufhängungsträger, ggfs. aber auch ein verstellbares Rad- bzw. Achsaufhängungselement sein, gegenüber dem der Achsträger des Bogey-Fahrwerks mit beiden Achsträgerteilen verschwenkbar bzw. auf und nieder wippbar ist. Bei einer solchen Konfiguration bzw. Anlenkung der Druckmittelaktoren führt jeder der beiden Druckmittelaktoren eine Stellbewegung aus, wenn der Achsträger des Bogey-Fahrwerks im Bogey-Fahrbetrieb auf und nieder wippt.

Um einerseits die Wippbarkeit des gesamten Achsträgers mit gegenläufig schwenkenden, insbesondere zueinander eingefrorenen Achsträgerhälften bzw. - schenkeln zu erreichen, andererseits aber auch das Anfahren einer festen Winkelstellung des Achsträgers relativ zum Maschinenrahmen zu ermöglichen, kann in Weiterbildung der Erfindung eine Druckmittelsteuervorrichtung zum Ansteuern der genannten zumindest zwei Druckmittelaktoren vorgesehen sein, die für die Druckmittelaktoren verschiedene Betriebsmodi vorsieht, in denen die Druckmittelbeaufschlagung in verschiedener Weise gesteuert ist. Insbesondere kann die genannte Druckmittelsteuervorrichtung einen Wipp-Betriebsmodus aufweisen, in dem die Druckmittelaktoren miteinander kurzgeschlossen sind, sodass die Druckmittelaktoren nach dem Verdrängerprinzip Druckmittel hin- und herschieben bzw. hin- und herpumpen, wenn es beim Auf- und Niederwippen des Achsträgers zu entsprechenden Bewegungen der Druckmittelaktoren kommt. Im genannten Kurzschlussbetrieb können die Druckmittelzylinder von einer Druckmittelquelle und/oder von einem Rücklauf zum Tank der Druckmittelversorgung abgesperrt sein, sodass Druckmittel nur intern zwischen den Druckmittelaktoren zirkuliert bzw. hin und her verdrängt wird.

Insbesondere können die genannten Druckmittelaktoren derart kurzgeschlossen sein, dass beim Aufwippen oder Niederwippen eines Achsträgerteils das aus dem damit verbundenen Druckmittelaktor verdrängte Druckfluid eine Stellbewegung des anderen Druckmittelaktors erzwingt, die zu einem gegenläufigen Niederwippen oder Aufwippen des mit dem genannten anderen Druckmittelaktor verbundenen anderen Achsträgerteils führt. Die Druckmittelaktoren sind also derart miteinander kurzgeschlossen, dass sie gegenseitig Stellbewegungen erzwingen, die zu einem Verschwenken bzw. Verwippen der Achsträgerteile in der gleichen Drehrichtung führen.

Je nach Anordnung und Anlenkung der Druckmittelaktoren können dies gegenläufige oder gleichlaufende Stellbewegungen der Druckaktoren sein. Sind beispielsweise als Druckmittelaktoren zwei Druckmittelzylinder vorgesehen, die auf derselben Seite des Achsträgers angeordnet bzw. auf derselben Seite der Schwenkachse an dem Schwenkachsträger angelenkt sind, sodass sich der eine Druckmittelzylinder längen und der andere Druckmittelzylinder verkürzen muss, um den Achsträger insgesamt bogey-artig zu verwippen bzw. die eine Radachse nach oben und die andere Radachse nach unten zu schwenken, können die beiden Druckmittelzylinder kreuzweise miteinander kurzgeschlossen werden, sodass Druckfluid, das beim Verkürzen des einen Zylinders aus diesem verdrängt wird, ein Längen des anderen Zylinders erzwingt.

Sind indes die genannten Druckmittelzylinder auf unterschiedlichen Seiten des Achsträgers angeordnet bzw. auf gegenüberliegenden Seiten der Schwenkachse angelenkt, beispielsweise in einer z-artigen Konfiguration oder in einer Konfiguration mit einem Zylinder oberhalb und einem Zylinder unterhalb des Achsträgers, sodass sich beide Druckmittelzylinder längen, um ein Wippen des gesamten Achsträgers in die eine Richtung zu ermöglichen und beide Druckmittelzylinder verkürzen, um ein Verwippen des Achsträgers in die andere Richtung zu ermöglichen, können die Druckmittelaktoren auch derart miteinander kurzgeschlossen sein, dass sich gleichläufige Stellbewegungen ergeben. In diesem Fall erzwingt das beim Verkürzen des einen Zylinders verdrängte Druckfluid ebenfalls eine Verkürzung des anderen Druckmittelzylinders, während das beim Längen des einen Druckmittelzylinders verdrängte Druckfluid ebenfalls ein Längen des anderen Druckmittelzylinders erzwingt.

Zusätzlich zu dem genannten Wipp-Betriebsmodus besitzt die zuvor genannte Druckmittelsteuervorrichtung vorteilhafterweise auch einen Stellbetriebsmodus, in dem zumindest einer der genannten Druckmittelaktoren mit einer Druckquelle und/oder einem Rücklauf verbunden ist, um durch Druckmittelbeaufschlagung und/oder Druckmittelablassen eine vorbestimmte Schwenkstellung anzufahren, und dann in der vorbestimmten Stellung feststellbar ist, beispielsweise indem zumindest eine Druckkammer des Druckmittelaktors mittels eines Sperrventils abgesperrt wird. In dem besagten Stellbetriebsmodus sieht die Druckmittelsteuervorrichtung also ein aktives Einstellen und Feststellen einer vorbestimmten Stellung des Druckmittelaktors vor, sodass der damit verbundene Achsträgerteil in einer absoluten Winkelstellung festgestellt werden kann, da der genannte Stellaktor wie oben erläutert einen Anlenkpunkt am Schwenkachsträger oder einem damit verbundenen Anlenkteil besitzt.

Vorteilhafterweise kann die Druckmittelsteuervorrichtung in dem besagten Stellbetriebsmodus beide Druckmittelaktoren durch Verbinden mit der Druckquelle und/oder dem Rücklauf in eine vorbestimmte absolute Winkelstellung relativ zum Maschinenrahmen fahren und feststellen, sodass die Position beider Radachsen des Bogey-Fahrwerks einstellbar und feststellbar ist.

Vorteilhafterweise kann die genannte Druckmittelsteuervorrichtung weiterhin einen Höhenverstellmodus aufweisen, in dem die beiden Druckmittelaktoren jeweils mit der genannten Druckquelle, ggfs. auch mit zwei separaten Druckquellen - oder einem Rücklauf - ggfs. auch mit zwei separaten Rückläufen - verbunden sind, um die relative Winkelstellung der beiden Achsträgerteile relativ zueinander verstellen und damit die Höhe des Bogey-Fahrwerks einstellen zu können.

Die genannte Druckmittelsteuervorrichtung kann vorteilhafterweise eine Ventileinrichtung umfassen, die verschiedene Schaltstellungen hat, in denen die Druckmittelaktoren in der zuvor beschriebenen Weise miteinander kurzgeschlossen und wahlweise mit einer Druckquelle oder einem Rücklauf verbunden werden können. Die genannte Ventil-einrichtung kann mehrere Sperrventile und/oder Mehrwegeventile aufweisen.

Die genannten Druckmittelaktoren und deren Druckmittelsteuervorrichtung sind dabei vorteilhafterweise derart ausgebildet, dass sich die Druckmittelaktoren im genannten Kurzschluss- bzw. Wipp-Betriebsmodus zumindest näherungsweise miteinander synchronisiert bewegen, sodass sich die durch die Druckmittelaktoren gesteuerten Achsträgerschenkel zumindest näherungsweise synchron miteinander, das heißt um näherungsweise gleiche Schwenkwinkel verschwenken. Eine vollständige Synchronisation der Achsträgerteile ist dabei nicht notwendig, kann gleichwohl aber vorgesehen sein, sodass die Achsträgerschenkel im Wipp-Betriebsmodus tatsächlich starr zueinander eingefroren sind und sich lediglich um die Schwenkachse auf und nieder wippen können, ohne Relativbewegungen zueinander auszuführen.

Um eine solchermaßen zumindest näherungsweise synchronisierte Verstellung der Druckmittelaktoren zu erzielen, können die Druckmittelaktoren einander entsprechende Verdrängungsvolumina haben, sodass die durch das verdrängte Druckfluid eines Druckmittelaktors erzwungene Stellbewegung des anderen Druckmittelaktors betragsmäßig zumindest näherungsweise dieselbe ist. Sind die Verdrängungsvolumina der beiden Druckmittelaktoren näherungsweise gleich groß, können die Druckmittelaktoren direkt miteinander kurzgeschlossen werden.

Alternativ oder zusätzlich kann im Kurzschlusskreis der beiden Druckmittelaktoren jedoch auch ein Ausgleichszylinder vorgesehen sein, der ggfs. unterschiedlich Verdrängungsvolumina ausgleicht bzw. zumindest ein Stück weit aneinander angleicht. Ein solcher Ausgleichszylinder kann unterschiedlich große Druckkammern aufweisen, wobei eine im Querschnitt größere Druckkammer mit dem Druckmittelaktor größeren Verdrängungsvolumens und die Druckkammer kleinerer Querschnittsfläche mit dem Druckmittelaktor kleineren Verdrängungsvolumens verbunden sein kann.

Je nach Anordnung der Druckmittelaktoren können die genannten Druckmittelaktoren im Kurzschlussmodus kreuzweise miteinander kurzgeschlossen sein, um gegenläufige Bewegungen auszuführen, oder parallel zueinander kurzgeschlossen sein, um gleichsinnige Bewegungen auszuführen. Wie zuvor erwähnt, können beispielsweise Druckmittelzylinder jeweils oberhalb des Achsträgers angeordnet und auf derselben Seite der Schwenkachse einen Anlenkpunkt besitzen, sodass sie sich gegenläufig verstellen, das heißt der eine Druckmittelzylinder sich längen und der andere Druckmittelzylinder sich verkürzen muss, um einen wippenden Bogey-Betrieb zu ermöglichen. In diesem Fall kann der genannte kreuzweise Kurzschluss vorgesehen sein. Ist andererseits - wie oben schon angesprochen - eine Anordnung der Druckmittelzylinder - beispielsweise ein Druckmittelzylinder oberhalb des Achsträgers und ein Druckmittelzylinder unterhalb des Achsträgers - vorgesehen, bei der sich beide Druckmittelzylinder längen, wenn der Achsträger insgesamt in die eine Richtung wippt, und sich beide Druckmittelzylinder verkürzen, wenn der Achsträger in die andere Richtung wippt, kann die genannte parallele Kurzschlussschaltung vorgesehen werden, um ein gleichlaufendes Verstellen der Zylinder zu erreichen.

Um verschiedene Achspositionen auch ohne Wegmess-Sensorik anfahren und feststellen und/oder einen größeren Höhenverstellbereich erzielen zu können, können in Weiterbildung der Erfindung auch mehr als zwei Druckmittelaktoren vorgesehen sein. Insbesondere können zwei weitere Druckmittelaktoren vorgesehen sein, die mit den beiden erstgenannten Druckmittelaktoren paarweise gekoppelt, insbesondere hintereinandergeschaltet sein können, sodass sich die Stellbewegung der weiteren Druckmittelaktoren über die erstgenannten Druckmittelaktoren auf die jeweiligen Achsträger überträgt. Ist beispielsweise ein erster Druckmittelaktor mit einem dritten Druckmittelaktor gekoppelt und ein zweiter Druckmittelaktor mit einem vierten Druckmittelaktor gekoppelt, kann die Stellbewegung des dritten Druckmittelaktors durch den ersten Druckmittelaktor auf den damit verbundenen Achsträger übertragen werden, während eine Stellbewegung des vierten Druckmittelaktors über den zweiten Druckmittelaktor auf den damit verbundenen Achsträger übertragen wird.

Insbesondere können die beiden weiteren Druckmittelaktoren - im zuvor beschriebenen Beispiel die dritten und vierten Druckmittelaktoren - dazu vorgesehen sein, die Anlenkpunkte der beiden erstgenannten Druckmittelaktoren - also des ersten und zweiten Druckmittelaktors - an dem Schwenkachsträger zu verstellen. Werden die dritten und vierten Druckmittelaktoren ein- oder ausgefahren, verschieben sich die Anlenkpunkte der ersten und zweiten Druckmittelaktoren an dem genannten Schwen kachsträger.

Beispielsweise können die genannten vier Druckmittelaktoren paarweise über Übertrager beispielsweise in Form von Schwenkhebeln miteinander gekoppelt sein, wobei die genannten Schwenkhebel jeweils an dem Schwenkachsträger schwenkbar gelagert sein können. Durch eine solche Koppelung mittels Schwenkhebeln kann einerseits eine sehr kompakte Bauweise erzielt werden, bei der sich die dritten und vierten Druckmittelaktoren unabhängig von der gewünschten Verstellrichtung für die Anlenkpunkte der ersten und zweiten Druckmittelaktoren anordnen lassen. Zum anderen kann über die genannten Schwenkhebel auch ein Übersetzungs- oder Untersetzungseffekt erzielt werden, der bei begrenztem Stellweg der Druckmittelaktoren und/oder begrenzter Baugröße der Druckmittelaktoren die gewünschte Stellbewegung ermöglicht.

Sind in der genannten Weise zumindest vier Druckmittelaktoren vorgesehen, die paarweise miteinander gekoppelt sind, kann die Druckmittelsteuervorrichtung in ihrem Wipp-Betriebsmodus an sich die ersten und zweiten Druckmittelaktoren miteinander kurzschließen wie zuvor beschrieben, wobei die dritten und vierten Druckmittelaktoren hierbei abgesperrt bzw. festgestellt werden können, sodass sich der Bogey- bzw. Wipp-Betrieb nur durch Bewegen der ersten und zweiten Druckmittelzylinder bewerkstelligen lässt.

Alternativ hierzu kann die Druckmittelsteuervorrichtung im Wipp-Betriebsmodus vorteilhafterweise aber auch einen Kurzschluss zwischen den Druckmittelzylindern vorsehen, der auch die zusätzlichen dritten und vierten Druckmittelaktoren miteinbezieht. Insbesondere können die beiden erstgenannten Druckmittelaktoren, die an den Achsträgerteilen angelenkt sind, jeweils mit dem zusätzlichen Druckmittelaktor kurzschließbar sein, mit dem sie jeweils nicht hintereinandergeschaltet und nicht durch den genannten Übertrager gekoppelt sind. Ist beispielsweise in der vorgenannten Weise der erste Druckmittelzylinder - ggfs. über den beschriebenen Schwenkhebel - mit dem dritten Druckmittelaktor gekoppelt und hintereinander geschaltet, kann der genannte erste Druckmittelzylinder mit dem vierten Druckmittelzylinder kurzschließbar sein, der mit dem zweiten Druckmittelaktor - ggfs. über einen weiteren Schwenkhebel - gekoppelt ist. Der genannte zweite Druckmittelzylinder ist dann mit dem vorgenannten dritten Druckmittelaktor kurzschließbar.

Dementsprechend erzwingen Bewegungen der ersten und zweiten Druckmittelaktoren entsprechende Bewegungen der dritten und vierten Druckmittelaktoren, sodass sich alle vier genannten Druckmittelaktoren verstellen, wenn der Achsträger insgesamt, das heißt mit beiden Achsträgerteilen, um die Schwenkachse im Bogey-Fahrbetrieb auf und nieder wippt.

Die erstgenannten zumindest zwei Druckmittelaktoren müssen jedoch nicht in der zuvor beschriebenen Weise jeweils einerseits an einer Achsträgerhälfte und andererseits an dem Schwenkachsträger bzw. einem anderen maschinenrahmenfesten Teil angelenkt sein. In alternativer Weiterbildung der Erfindung nach einem weiteren vorteilhaften Ausführungsbeispiel können die beiden Druckmittelaktoren auch getrennte bzw. unterschiedliche Funktionsaufgaben haben und unterschiedlich angelenkt sein. Insbesondere kann der eine Druckmittelaktor für die Höheneinstellung des Bogey-Fahrwerks vorgesehen sein, insbesondere zum Verschwenken der beiden Achsträgerteile relativ zueinander angeordnet und ausgebildet sein, während der andere der zumindest zwei Druckmittelaktoren dazu vorgesehen sein kann, die absolute Winkelstellung des Achsträgers relativ zum Maschinenrahmen einzustellen und/oder festzustellen.

Insbesondere kann einer der beiden Druckmittelaktoren Anlenkpunkte an verschiedenen Achsträgerteilen aufweisen, sodass ein Verstellen des Druckmittelaktors ein Verschwenken der beiden Achsträgerteile relativ zueinander bewirkt. Der andere der beiden Druckmittelaktoren kann einerseits an einem der beiden Achsträgerteile angelenkt sein und andererseits einen maschinenrahmenfesten Anlenkpunkt besitzen bzw. an dem zuvor schon genannten Schwenkachsträger oder einem damit verbundenen Element, gegenüber dem sich der Achsträger beim Bogey-Wippen verdrehen muss, angelenkt sein.

Da jeder Druckmittelaktor seine eigene Aufgabe hat, können die Druckmittelaktoren individuell an ihre jeweilige Aufgabe angepasst sein und insbesondere auch voneinander verschieden ausgebildet sein. Beispielsweise kann der die beiden Achsteile zueinander verstellende Druckmittelaktor einen anderen Stellweg und/oder einen anderen Kolbendurchmesser aufweisen als der Druckmittelaktor, der die Winkelstellung der Achsteile relativ zum Maschinenrahmen einstellt. Alternativ oder zusätzlich kann auch die Druckmittelsteuervorrichtung für die beiden Druckmittelaktoren unterschiedlich ausgebildet sein, insbesondere verschiedene Ventilanordnungen umfassen, mittels derer der jeweilige Druckmittelaktor angesteuert werden kann.

Bei einer derartigen Funktionsteilung der Druckmittelaktoren kann die zuvor genannte Druckmittelsteuereinrichtung in ihrem Wipp-Betriebsmodus den Druckmittelaktor, der Anlenkpunkte an beiden Achsträgerteilen hat und für die Höhenverstellung zuständig ist, sperren, beispielsweise durch Verriegeln längenunveränderbar machen und somit die Relativstellung der beiden Achsträgerteile zueinander einfrieren, und den anderen Druckmittelaktor, der einen maschinenrahmenfesten Anlenkpunkt hat, in Schwimmstellung schalten.

Andererseits kann die genannte Druckmittelsteuereinrichtung in ihrem Stellbetriebsmodus den genannten Druckmittelaktor mit einem maschinenrahmenfesten Anlenkpunkt durch Druckbeaufschlagung oder Verbinden mit dem Rücklauf in eine vorbestimmte Betriebsstellung fahren und feststellen, wobei der andere Druckmittelaktor mit Anlenkpunkten an beiden Achsteilen verriegelt bleiben kann oder ebenfalls in eine andere Stellung verfahren und dann verriegelt werden kann. Gegebenenfalls wäre es auch denkbar, den genannten Druckmittelaktor, der Anlenkpunkte an beiden Achsträgerteilen hat, in Schwimmstellung zu schalten, wobei in diesem Fall dann das gesamte Gewicht von dem anderen Achsträgerteil abzufangen wäre, welches durch den Druckmittelaktor mit maschinenrahmenfestem Anlenkpunkt verriegelt ist.

Eine solche ungleiche Lastverteilung auf die beiden Bogey-Achsen kann insbesondere auch dazu genutzt werden, bei engeren Kurvenfahrten ein Radieren der Räder zu vermeiden. Insbesondere kann die Drucksteuervorrichtung einen Kurvenbetriebsmodus umfassen, in dem eine der beiden Radachsen entlastet und/oder angehoben wird, während die andere Radachse belastet wird, um das Maschinengewicht gegebenenfalls zusammen mit der Abstützkraft der Deichsel zu tragen. Insbesondere kann bei Kurvenfahrten die hintere der beiden Bogey-Radachsen entlastet und/oder angehoben werden, was beispielsweise dadurch erfolgen kann, dass die Drucksteuervorrichtung den Druckmittelaktor, der eines der Achsträgerteile, insbesondere das vordere Achsträgerteil am Maschinenrahmen abstützt, verriegelt und/oder mit ausreichendem Druck beaufschlagt, während der Druckmittelaktor, der die beiden Achsträgerteile relativ zueinander verstellen kann, in Schwimmstellung gebracht wird oder aktiv mit Druck beaufschlagt wird, um die Radachse sogar leicht anzuheben.

Die Druckmittelsteuervorrichtung kann hierzu in Abhängigkeit eines Kurvenfahrsignals arbeiten, wobei ein solches Kurvenfahrsignal in unterschiedlicher Weise gewonnen bzw. bereitgestellt werden kann. Beispielsweise kann dies ein Lenkeinschlagsignal des Schleppers sein, das den Lenkeinschlag des Schleppers angibt. Alternativ oder zusätzlich kann mit einer Sensorik auch das Einlenken der Deichsel des Anbaugeräts gegenüber dem Schlepper bzw. gegenüber einem Anbaugeschirr gemessen werden und als Kurvenfahrsignal verwendet werden, in Abhängigkeit dessen eine der Bogey-Achsen entlastet und/oder angehoben werden kann.

Alternativ oder zusätzlich kann eine solche ungleiche Radachsbelastung auch in anderen Betriebssituationen sinnvoll sein und von der Drucksteuervorrichtung vorgesehen werden. Ist das Anbaugerät beispielsweise eine Ballenpresse, kann es sinnvoll sein, für die Ballenübergabe von der Ballenformkammer auf den in Fahrtrichtung nachlaufenden Wickler die in Fahrtrichtung hintere Bogey-Achse stärker zu belasten und/oder die vordere Bogey-Fahrachse zu entlasten, sodass das Gewicht des Ballens bei der Übergabe stärker durch die hintere und/oder näher am Ballen liegende Radachse abgestützt wird. Hierdurch können Stöße, die beim Übergeben des Ballens auf den Wickler entstehen, besser abgefangen und vom Schlepper ferngehalten werden.

Die Drucksteuervorrichtung kann hierzu beispielsweise einen Ballenübergabe-Betriebsmodus aufweisen, der die Lastverteilung in der genannten Weise auf die Radachsen des Bogey-Fahrwerks unterschiedlich steuert, wobei die Drucksteuervorrichtung in Abhängigkeit eines Ballenübergabesignals arbeiten kann. Ein solches Ballenübergabesignal kann ebenfalls in verschiedener Weise gewonnen bzw. vorgesehen werden. Beispielsweise kann das Öffnen der Heckklappe der Ballenformkammer sensorisch überwacht und als Übergabesignal genutzt werden, wobei aber auch die Bewegung des Ballens aus der Formkammer heraus auf den Wickler selbst und/oder eine Bewegung eines Ballenauswerfers sensorisch überwacht werden können, um der Drucksteuervorrichtung zu signalisieren, dass die Ballenübergabe auf den Wickler erfolgt, und die Achslastverteilung entsprechend zu steuern.

Der genannte "maschinenrahmenfeste" Anlenkpunkt muss dabei nicht tatsächlich fix und unverschieblich bzw. unbeweglich sein, sondern meint lediglich den Anlenkpunkt des Druckmittelaktors, der auf der Maschinenrahmenseite liegt und nicht an einem der Achsträgerteile befestigt ist. Sind in der vorgenannten Weise weitere Druckmittelaktoren vorgesehen, kann der maschinenrahmenfeste Anlenkpunkt des ersten oder zweiten Druckmittelaktors beispielsweise an dem besagten Schwenkhebel liegen, der am Schwenkachsträger schwenkbar gelagert ist und mit dem genannten weiteren Druckmittelaktor gekoppelt ist.

In vorteilhafter Weiterbildung der Erfindung kann die landwirtschaftliche Maschine mit einem Wiegesystem versehen sein, das den Druck in zumindest einem der genannten Druckmittelaktoren des Bogey-Fahrwerks erfasst und in Abhängigkeit des erfassten Drucks ein Gewichtssignal bereitstellt, welches die Beladung und/oder das Maschinengewicht charakterisiert. Dabei kann der Druck in dem entsprechenden, zumindest einen Druckmittelaktor des Bogey-Fahrwerks direkt in einer entsprechenden Druckkammer des Zylinders, aber auch in einer entsprechenden Zuleitung erfasst werden.

Je nach Anlenkung der Maschine an den Schlepper kann das genannte Wiegesystem für die Gewichtsbestimmung zusätzlich zu dem Druck aus den Druckmittelaktoren des Bogey-Fahrwerks auch eine Belastung der Deichsel der Maschine erfassen und berücksichtigen, um auch die Gewichtskomponente, die sich über die Deichsel abstützt, mit zu berücksichtigen.

Sind die Druckmittelaktoren gemäß der zuvor beschriebenen Funktionsteilung so angeordnet, dass einer der Druckmittelaktoren die Achsträgerteile relativ zueinander verstellt und der andere Druckmittelaktor die absolute Winkelstellung zum Maschinenrahmen einstellt, kann in einfacher Weise nur der Druck des Aktors, der die Relativstellung der Achsträgerteile steuert, für die Wiegung erfasst und verwendet werden. Dabei kann es sinnvoll sein, die Drucksteuervorrichtung vom Wiegesystem in einen Wiege-Betriebsmodus zu schalten, in dem der genannte Druckmittelaktor für die absolute Winkelstellung in Schwimmstellung ist, so dass sich die Achslast gleichmäßig verteilt, und/oder den Druckmittelaktor für die Relativstellung in eine vorbestimmte Stellung zu verfahren, um für die Druckmessung eine vorbestimmte Achträger-Geometrie mit vorbestimmten Hebelarmen einzustellen.

Sind alternativ die Druckmittelaktoren jeweils einerseits an einem der Achsträgerteile und andererseits an einem Maschinenrahmen festen Punkt angelenkt, kann der Druck in beiden Druckmittelaktoren herangezogen werden, der sich einstellt, wenn die beiden Druckmittelaktoren in Schwimmstellung geschaltet sind, d.h. gegenläufig verfahren können, um die Achsträger in einer festen Stellung relativ zueinander zu halten, jedoch ein Pendeln des Achsträgers insgesamt zu erlauben. Auch hier kann es sinnvoll sein, die Drucksteuervorrichtung vom Wiegesystem in einen Wiege-Betriebsmodus zu schalten, in dem die beiden Druckmittelaktoren in eine vorbestimmte Stellung gefahren werden, um für die Druckmessung eine vorbestimmte Achträger-Geometrie mit vorbestimmten Hebelarmen einzustellen.

Vorteilhafterweise kann zumindest einer der Druckmittelaktoren, insbesondere der die Relativstellung der beiden Achsträgerteile steuernde Druckmittelaktor, mit einem Druckspeicher verbunden werden, welcher Druckspeicher als Dämpfer arbeiten kann, um im Fahrbetrieb vom Boden her aufgenommene Stöße zu dämpfen. Durch eine Strömungsverbindung mit einem Druckspeicher können die beiden Achsträgerteile relativ zueinander Ausgleichsbewegungen durchführen, wenn von der Fahrbahn her Stöße kommen. Alternativ oder zusätzlich kann ein solcher Druckspeicher auch für den Druckmittelzylinder sinnvoll sein, der die absolute Winkelstellung vorgibt, um in entsprechender Weise Ausgleichsbewegungen zuzulassen, wenn Fahrbahnstöße auftreten, beispielsweise in einer Phase ungleicher Achslastverteilung.

Die Druckmittelaktoren können grundsätzlich in verschiedener Weise ausgebildet sein. In vorteilhafter Weiterbildung der Erfindung können insbesondere Doppelzylinder vorgesehen sein, die auf einer gemeinsamen Kolbenstange zwei Kolben aufweisen können, die in jeweils separaten Zylindern verschiebbar aufgenommen sind. Vorteilhafterweise kann jeder der Zylinder doppeltwirkend ausgebildet sein, sodass jeder der beiden Kolben in seinem jeweiligen Zylinder in beide Richtungen verschoben und Druck beaufschlagt werden kann.

Ein solcher Doppelzylinder kann bei den verschiedenen Anordnungen der Druckmittelaktoren sinnvoll sein. Insbesondere kann der die Relativbewegung der beiden Achsträgerteile steuernde Druckmittelzylinder und/oder der die absolute Winkelstellung zum Maschinenrahmen steuernde Druckmittelzylinder in der genannten Weise als Doppelzylinder ausgebildet sein.

Die Erfindung wird nachfolgend anhand bevorzugter Ausführungsbeispiele und zugehöriger Zeichnungen näher erläutert. In den Zeichnungen zeigen:
- Fig. 1:: eine schematische Seitenansicht einer landwirtschaftlichen Erntemaschine in Form einer Ballenpresse, deren Maschinenrahmen über ein Bogey-Fahrwerk am Boden abgestützt ist, wobei die Achsträgerteile des Bogey-Fahrwerks bei dieser Ausführung durch Druckmittelaktoren verstellbar sind, die jeweils einen maschinenrahmenfesten Anlenkpunkt haben,
- Fig. 2:: eine vergrößerte Teilansicht des Bogey-Fahrwerks aus Fig. 1, die die Anlenkung der Druckmittelaktoren und deren Kurzschließbarkeit für den Bogey-Betrieb zeigt,
- Fig. 3:: eine schematische Seitenansicht eines Bogey-Fahrwerks ähnlich Fig. 2 nach einer weiteren Ausführungsform, bei der zusätzliche dritte und vierte Druckmittelaktoren vorgesehen und mit den ersten und zweiten Druckmittelaktoren über Schwenkhebel gekoppelt sind, wobei die Kurzschlussschaltung für den Wipp-Betrieb dargestellt ist,
- Fig. 4:: eine perspektivische Darstellung des Bogey-Fahrwerks aus Fig. 3 zusammen mit der Ventileinrichtung der Druckmittelsteuervorrichtung, mittels derer die Druckmittelaktoren im Wipp-Betriebsmodus sowie in einem Stellbetriebsmodus betrieben werden können,
- Fig. 5:: eine perspektivische Darstellung eines Bogey-Fahrwerks nach einer weiteren Ausführungsform der Erfindung, bei der ein Druckmittelaktor Anlenkpunkte an beiden Achsträgerteilen und ein weiterer Druckmittelaktor einen Anlenkpunkt an einem Achsträgerteil und einem maschinenrahmenfesten Anlenkpunkt aufweist,
- Fig. 6:: eine Seitenansicht des Bogey-Fahrwerks aus Fig. 5 in einer Blickrichtung parallel zur Schwenkachse des Bogey-Fahrwerks, und
- Fig. 7:: eine schematische Darstellung der Drucksteuervorrichtung zum Ansteuern der Druckmittelaktoren des Bogey-Fahrwerks nach der Ausführung der Figuren 5 und 6, wobei die Drucksteuervorrichtung in verschiedenen Betriebsmodi dargestellt ist.

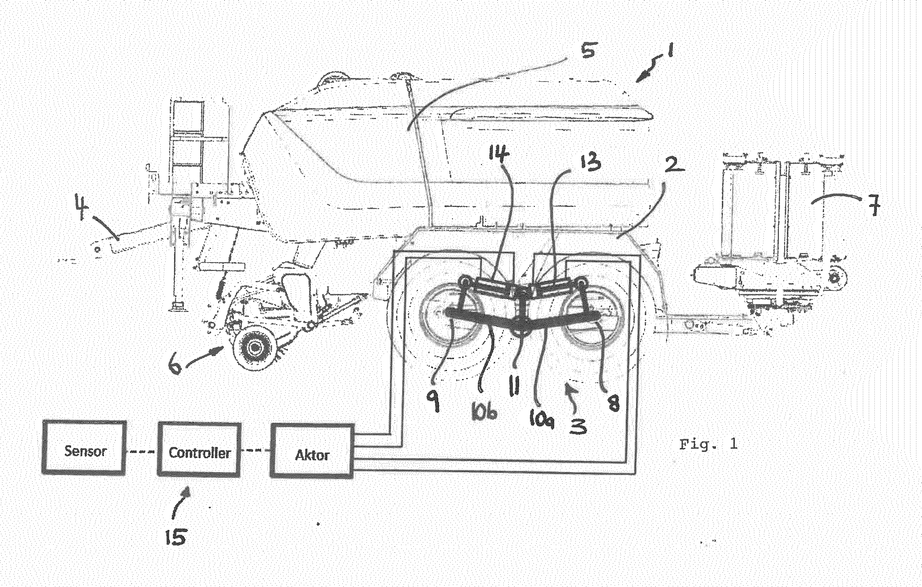

Wie Fig. 1 zeigt, kann die landwirtschaftliche Erntemaschine als Anbaugerät zum Anbau an einen nicht dargestellten Schlepper ausgebildet sein, beispielsweise in Form einer Ballenpresse, deren Maschinenrahmen 2 mittels eines Bogey-Fahrwerks 3 am Boden abgestützt ist. Fig. 1 zeigt dabei lediglich das linke Fahrwerk. Es versteht sich jedoch, dass die Erntemaschine 1 ein solches Fahrwerk links und rechts besitzen kann.

Der Maschinenrahmen 2 ist über eine Anbauvorrichtung 4 beispielsweise in Form einer Deichsel an den nicht gezeigten Schlepper anbaubar und kann bei Ausbildung als Ballenpresse eine Ballenformkammer 5 als Maschinenaufbau tragen. Eine Erntegut-Aufnahmevorrichtung 6 beispielsweise mit einer rotierenden Stachelwalze sammelt Erntegut vom Boden auf und fördert dies in die genannte Ballenformkammer 5, in der das Erntegut zu einem Ballen geformt wird, der dann an eine Wickelvorrichtung 7 übergeben wird, um mit einem Netz, einer Folie oder einem anderen Wickelgut umwickelt zu werden.

Die beiden Bogey-Fahrwerke 3 auf der rechten und linken Seite des Maschinenrahmens 2 sind dabei höhenverstellbar ausgebildet, wie noch näher erläutert wird, wobei die Fahrwerke 3 vorteilhafterweise individuell und unabhängig voneinander höhenverstellbar sein können, um eine Hangneigung ausgleichen zu können, wenn die Erntemaschine 1 in geneigtem Gelände verfahren wird. Zusätzlich können aber auch beide Fahrwerke 3 rechts und links synchron miteinander oder aufeinander abgestimmt höhenverstellt werden, beispielsweise um beim Durchfahren einer größeren Senke oder Auffahren auf eine Rampe mehr Bodenfreiheit zu gewinnen.

Wie die Figuren zeigen, umfasst jedes Bogey-Fahrwerk 3 zwei Radachsen 8,9, die nach Art einer Zwillingsachse in kurzem Abstand hintereinander angeordnet sind und an einem gemeinsamen Achsträger 10 befestigt sind, der sich näherungsweise liegend in Fahrtrichtung erstrecken kann. Der besagte Achsträger 10 ist um eine Schwenkachse 11, die sich liegend quer zur Fahrtrichtung zwischen den Radachsen 8 und 9 erstrecken kann, schwenkbar an einem Schwenkachsträger 12 gelagert, der mit dem Maschinenrahmen 2 verbunden ist, beispielsweise starr daran befestigt sein kann. Der genannte Achsträger 10 ist hierdurch um eine liegende Querachse, das heißt die genannte Schwenkachse 11 auf und nieder wippbar.

Um eine Höhenverstellbarkeit des Bogey-Fahrwerks 3 zu ermöglichen, ist der genannte Achsträger 10 geteilt ausgebildet und umfasst zwei Achsträgerteile 10a und 10b, die zueinander verschwenkbar bzw. abknickbar sind, und zwar ebenfalls um eine sich liegend quer zur Fahrtrichtung erstreckende Knickachse. Insbesondere können die beiden Achsträgerteile 10a und 10b gemeinsam an der zuvor genannten Schwenkachse 11 angelenkt sein, sodass sie relativ zueinander um die Schwenkachse 11 knickbar sind und auch gemeinsam um die genannte Schwenkachse 11 auf und nieder wippbar sind.

Grundsätzlich wäre es aber auch möglich, dass die Achsträgerteile 10a und 10b um zwei separate, parallele Schwenkachsen 11 und 111 schwenkbar bzw. auf und nieder wippbar nach Art einer Schwinge gelagert sind, wobei solche separaten Schwenkachsen 11 und 111 vorteilhafterweise nahe beieinander und/oder etwa mittig zwischen den Radachsen 8 und 9 angeordnet sein können.

Um das Verschwenken bzw. Auf- und Niederwippen des Achsträgers 10 und dessen Achsträgerteile 10a und 10b zu steuern, sind zumindest zwei Druckmittelaktoren 13 und 14 vorgesehen, die insbesondere als Druckmittelzylinder oder Hydraulikzylinder ausgebildet sein können. Gegebenenfalls kommen aber auch andere Ausbildungen beispielsweise in Form von hydraulischen Drehmotoren in Betracht.

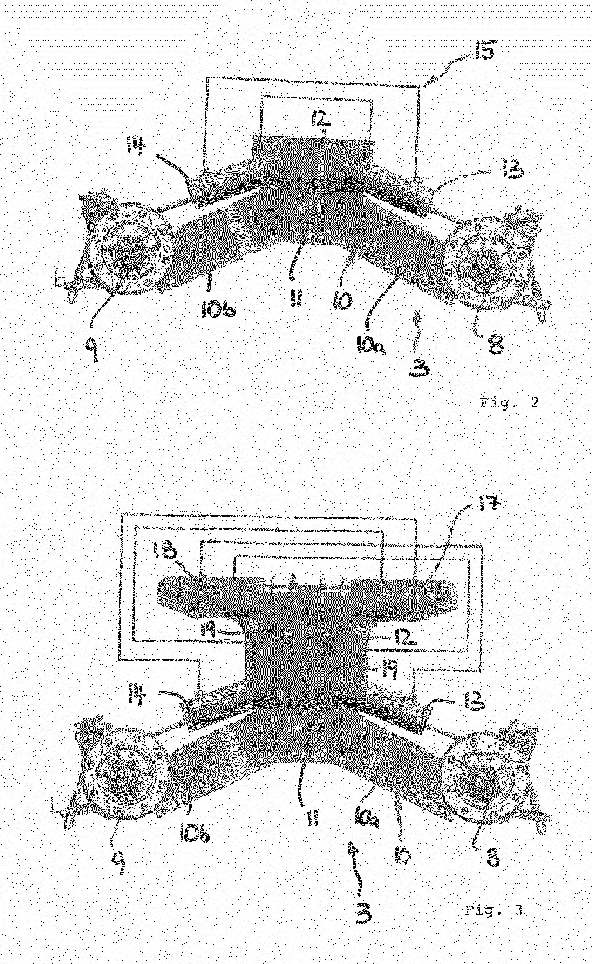

Wie die Figuren 1 und 2 zeigen, können die zumindest zwei Druckmittelaktoren 13 und 14 jeweils einerseits an einem der Achsträgerteile 10a bzw. 10b und andererseits jeweils an dem Schwenkachsträger 12 oder einem damit verbundenen bzw. auch einem maschinenrahmenfesten Trägerteil angelenkt sein. Die Anlenkpunkte sind dabei derart gewählt, dass die Druckmittelaktoren 13 und 14 bzw. deren Anlenkpunkte einen Hebelarm zur Schwenkachse 11 haben, um auf die Achsträgerteile 10a und 10b ein Drehmoment ausüben zu können.

Vorteilhafterweise können die beiden Druckmittelaktoren 13 und 14 auf derselben Seite des Achsträgers 10 angeordnet sein, beispielsweise oberhalb des Achsträgers 10.

Soll das Bogey-Fahrwerk 3 höhenverstellt werden, können beide Druckmittelaktoren 13 und 14 ausgefahren werden, sodass die beiden Achsträgerteile 10a und 10b relativ zueinander verschwenken, wie dies ein Vergleich der Figuren 1 und 2 zeigt.

Soll das Bogey-Fahrwerk 3 in einer eingestellten Höhenstellung mit seinen Radachsen 8 und 9 gegenläufig auf und nieder wippen, wie dies für Bogey-Fahrwerke charakteristisch ist, können die Druckmittelaktoren 13 und 14 zueinander gegenläufig verstellt werden, insbesondere kann einer der Druckmittelaktoren eingefahren und der andere Druckmittelaktor ausgefahren werden.

Soll eine vorbestimmte Position der Radachsen 8 und 9 angefahren werden, insbesondere im Sinne einer vorgegebenen Stellung relativ zum Maschinenrahmen 2, können die Druckmittelaktoren 13 und 14 in eine entsprechende Position gefahren und dort festgestellt werden.

Um die genannten drei Betriebsmodi vorsehen bzw. steuern zu können, ist eine Druckmittelsteuervorrichtung 15 vorgesehen, die die Beaufschlagung der Druckmittelaktoren 13 und 14 mit Druckmittel, insbesondere Hydraulikflüssigkeit, in verschiedener Weise steuern kann. Die genannte Druckmittelsteuervorrichtung 15 kann eine Ventilanordnung 16 mit einem oder mehreren Schaltventilen und/oder Steuerventilen aufweisen, um die Beaufschlagung der Druckkammern der Druckmittelaktoren 13 und 14 steuern und mit verschiedenen Druckmittelkreis-Bausteinen verbinden zu können, insbesondere wahlweise mit einer Druckquelle, einem Rücklauf zum Tank und im Kurzschluss mit jeweils einer Druckkammer anderer Druckmittelaktoren.

Die genannten Druckmittelaktoren 13 und 14 können in einfacher Auswirkung einfach wirkende Druckmittelzylinder sein, insbesondere unter der Annahme, dass das Gewicht der Erntemaschine die Radachsen 8 und 9 des Bogey-Fahrwerks 3 an sich immer zum Maschinenrahmen 2 bzw. nach oben zu drücken versucht. Vorteilhafterweise aber können doppelt wirkende Druckmittelzylinder Verwendung finden, um die Stellbewegungen in beide Richtungen steuern zu können, insbesondere auch um das Verwippen des Achsträgers 10 im Bogey-Betrieb nach dem Verdrängerprinzip steuern zu können.

Wie Fig. 2 verdeutlicht, können die Druckmittelaktoren 13 und 14 strömungstechnisch kurzgeschlossen werden, sodass aus einem Druckmittelaktor verdrängtes Druckfluid eine Stellbewegung des anderen Druckmittelaktors erzwingt. Wie Fig. 2 verdeutlicht, können die Druckmittelaktoren 13 und 14 dabei direkt miteinander strömungstechnisch verbunden sein, sodass tatsächlich Druckfluid aus dem einen Druckmittelaktor in den anderen Druckmittelaktor strömen und zurückströmen kann. Alternativ wäre es aber auch möglich, in die Kurzschlussverbindung einen Ausgleichszylinder zwischenzuschalten, sodass aus einem Druckmittelaktor verdrängtes Druckfluid eine Stellbewegung des Ausgleichszylinders erzwingt, die dann wiederum aus dem Ausgleichszylinder Druckfluid verdrängt und hierdurch eine Stellbewegung des anderen Druckmittelaktors erzwingt. Mittels eines solchen zwischengeschalteten Ausgleichszylinders können ggfs. vorhandene Unterschiede im Verdrängungsvolumen bzw. in der Querschnittsfläche der Druckkammern der beiden Druckmittelaktoren 13 und 14 ausgeglichen werden.

Wie Fig. 2 verdeutlicht, sind in besagtem Wipp-Betriebsmodus der Druckmittelsteuervorrichtung 15 die Druckmittelaktoren 13 und 14 derart kurzgeschlossen, dass nach dem Verdrängerprinzip ein Verkürzen des einen Druckmittelaktors ein Längen des anderen Druckmittelaktors und/oder ein Längen des einen Druckmittelaktors ein Verkürzen des anderen Druckmittelaktors erzwingt.

Die Druckmittelaktoren 13 und 14 können hierbei von einer Druckquelle und einem Rücklauf abgesperrt bzw. abgetrennt sein, sodass sich ein verknüpfter, kurzgeschlossener Schwimmzustand der beiden Druckmittelaktoren und damit eine freie Wippbarkeit des Achsträgers 10 einstellt, bei der die beiden Achsträgerteile 10a und 10b in einer vorgegebenen Relativstellung zueinander eingefroren sind. Sind die Verdrängungsvolumina allerdings nicht exakt gleich bzw. über einen Ausgleichszylinder nicht kompensiert, können sich beim Verwippen des Achsträgers 10 auch Relativbewegungen der Achsträgerteile zueinander im Sinne eines leichten Abknickens bzw. Streckens ergeben. Vorteilhafterweise werden solche Relativbewegungen jedoch durch geeignete Wahl der Verdrängervolumina bzw. deren Ausgleich kleingehalten beziehungsweise ganz vermieden.

Selbstverständlich muss beim genannten "freien" Verwippen des Achsträgers 10 der Strömungswiderstand überwunden werden, der sich beim Verdrängen des Druckfluids ergibt, was ggfs. auch zu einer Dämpfung der Wippbewegung genutzt werden kann, beispielsweise indem Strömungssteuerventile oder Drosseln den Fluss des verdrängten Druckfluids steuern.

Im Höheneinstell-Betriebsmodus kann die Druckmittelsteuervorrichtung 15 den genannten Kurzschlussmodus beenden und die Druckkammern der Druckmittelaktoren 13 und 14 mit einer Druckquelle verbinden, um die Druckmittelaktoren 13 und 14 beide auszufahren, um die Achsträgerteile zueinander zu verschwenken, wie dies ein Vergleich der Figuren 1 und 2 zeigt.

Soll eine bestimmte Stellung der Radachsträgerteile 10a und 10b angefahren werden, kann die Druckmittelsteuervorrichtung 15 ferner in einem Stellbetriebsmodus die Druckmittelaktoren 13 und 14 jeweils in gewünschter Weise mit der Druckquelle oder dem Rücklauf des Systems verbinden, um eine bestimmte Aktorstellung anzufahren, und dann die Druckmittelaktoren 13 und 14 abzusperren bzw. zu verriegeln, um die angefahrene Stellung zu halten.

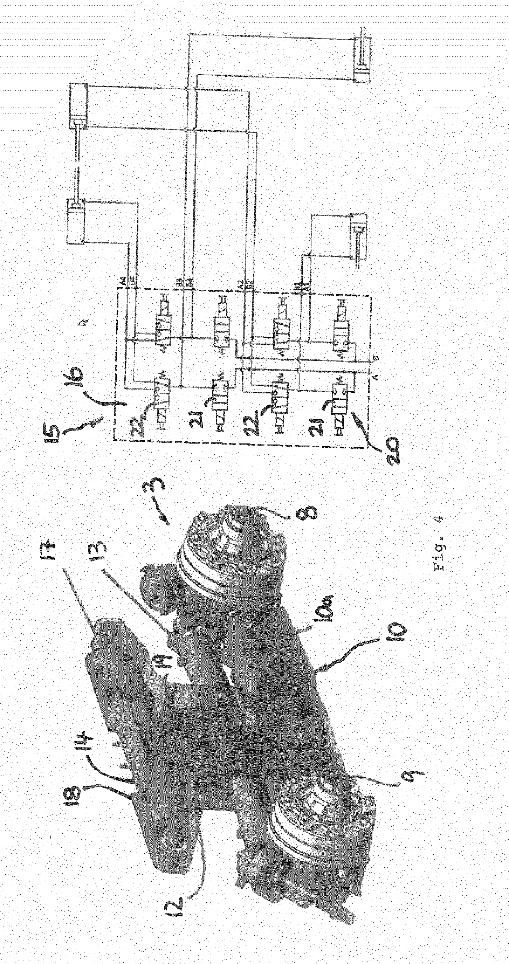

Um in einfacher Weise stufenweise verschiedene Höhenstellungen bzw. Betriebsstellungen anfahren zu können, ohne eine Wegmessung zu benötigen, kann die Einstellvorrichtung zum Einstellung der Stellungen der Achsträgerteile auch mehr als zwei Druckmittelaktoren aufweisen. Wie die Figuren 3 und 4 zeigen, können insbesondere zumindest zwei weitere Druckmittelaktoren 17 und 18 vorgesehen sein, die mit den erstgenannten Druckmittelaktoren 13 und 14 gekoppelt, insbesondere hintereinandergeschaltet sein können, sodass ein Verstellen der weiteren Druckmittelaktoren 17 und 18 über die erstgenannten Druckmittelaktoren 13 und 14 eine Stellbewegung der Achsträgerteile 10a und 10b induziert.

Vorteilhafterweise können auch die genannten weiteren Druckmittelaktoren 17 und 18 auf derselben Seite des Achsträgers 10 wie die anderen Druckmittelaktoren 13 und 14 angeordnet sein, insbesondere oberhalb des Achsträgers 10.

Diese weiteren Druckmittelaktoren 17 und 18 können einerseits an dem Schwenkachsträger 12 oder einem mit dem Maschinenrahmen 2 verbundenen Trägerteil angelenkt sein und andererseits einen Anlenkpunkt besitzen, der mit den anderen Druckmittelaktoren 13 und 14 gekoppelt ist. Insbesondere können die weiteren Druckmittelaktoren 17 und 18 sowie die erstgenannten Druckmittelaktoren 13 und 14 jeweils an einem Übertrager 19 angelenkt sein, der beweglich gelagert ist und die Stellbewegung der weiteren Druckmittelaktoren 17 und 18 in eine Bewegung der schwenkachsträgerseitigen Anlenkpunkte der erstgenannten Druckmittelaktoren 13 und 14 umsetzt. Der genannte Übertrager 19 kann insbesondere als schwenkbarer Übertragerhebel ausgebildet sein, der schwenkbar an dem Schwenkachsträger 12 gelagert ist. Grundsätzlich wäre es aber auch denkbar, einen verschieblich gelagerten Übertrager vorzusehen, beispielsweise dergestalt, dass die miteinander gekoppelten Druckmittelaktoren an einem gemeinsamen Gelenkzapfen angelenkt sind, der in einer Nut verschieblich geführt ist.

Wie Fig. 3 und Fig. 4 zeigen, sind die weiteren Druckmittelaktoren 17 und 18 mit den erstgenannten Druckmittelaktoren 13 und 14 paarweise gekoppelt. Ein erster Druckmittelaktor 13 ist mit einem dritten Druckmittelaktor 17 gekoppelt, während der zweite Druckmittelaktor 14 mit dem vierten Druckmittelaktor 18 gekoppelt ist, vgl. Figuren 3 und 4.

Bei einer solchen Konfiguration der Einstellvorrichtung mit mehr als zwei Druckmittelzylindern stehen mehrere Verstellbereiche bzw. eine mehrstufige Verstellbarkeit zur Verfügung. Zum einen ist dies an sich der Verstellbereich der erstgenannten Druckmittelaktoren 13 und 14, wie zuvor in Verbindung mit den Figuren 1 und 2 beschrieben. Zum anderen steht ein zweiter Verstellbereich durch Verstellen der weiteren Druckmittelaktoren 17 und 18 zur Verfügung. Werden beide Paare von Druckmittelaktoren 13 und 14 sowie 17 und 18 verstellt, addieren sich die Verstellbereiche bzw. kompensieren sich die Verstellbereiche in entsprechender Weise.

Die Druckmittesteuervorrichtung 15 kann hierbei sowohl für die ersten und zweiten Druckmittelaktoren 13 und 14 als auch für die dritten und vierten Druckmittelaktoren 17 und 18 jeweils die zuvor beschriebenen Betriebsmodi, das heißt den Wipp-Betriebsmodus, den Stellbetriebsmodus und den Höhenverstellmodus vorsehen und die Druckmittelaktoren entsprechend ansteuern, wobei die Druckmittelaktoren 13 und 14 einerseits und die Druckmittelaktoren 17 und 18 andererseits jeweils individuell oder auch in Kombination miteinander entsprechend mit Druckfluid beaufschlagt werden können.

Bezüglich des Wipp-Betriebsmodus kann die Druckmittelsteuervorrichtung 15 dabei auch eine besondere Kurzschlussverschaltung zwischen den Druckmittelaktoren vorsehen, wie dies Fig. 3 zeigt. Insbesondere können jeweils Paare von Druckmittelaktoren miteinander kurzgeschlossen werden, die nicht über den vorgenannten Übertrager 19 miteinander gekoppelt sind. Wie Fig. 3 zeigt, kann insbesondere der erste Druckmittelaktor 13 mit dem vierten Druckmittelaktor 18 kurzgeschlossen werden, während der zweite Druckmittelaktor 14 mit dem dritten Druckmittelaktor 17 kurzgeschlossen wird, sodass sich über das Verdrängerprinzip bei Niederwippen des einen Achsträgerteils ein Aufwippen des anderen Achsträgerteils und umgekehrt ergibt. Das beim Aufwippen des einen Achsträgerteils aus dem Druckmittelaktor 13 oder 14 verdrängte Druckfluid erzwingt eine Verstellung des damit jeweils kurzgeschlossenen Druckmittelaktors 17 oder 18, was dann über den jeweiligen Übertrager 19 zu einer entsprechenden Stellbewegung des anderen Achsträgerteils führt.

Fig. 4 zeigt eine beispielsweise Ausbildung der Druckmittelsteuervorrichtung, die eine Mehrzahl von Schaltventilen vorteilhafterweise in Form von Mehrwegeschaltventilen aufweisen kann. Die genannten Mehrwegeschaltventile können dabei einerseits Absperrventile 21 zum Absperren des jeweiligen Druckaktors von der Druckquelle und/oder dem Rücklauf, sowie andererseits Umschaltventile 22 zum Umschalten der Fluidverbindungen zwischen den Druckmittelaktoren und zwischen einem jeweiligen Druckmittelaktor und der Druckquelle bzw. dem Rücklauf umfassen.

Vorteilhafterweise sind die Mehrwegeschaltventile 20 derart ausgebildet, angeordnet und miteinander verschaltet, dass die Druckmittelaktoren 13 und 14 bzw. 17 und 18 in der vorgenannten Weise wahlweise mit einer Druckquelle, einem Rücklauf oder im Kurzschluss miteinander verbunden oder davon getrennt, und auch ganz abgesperrt werden können, um eine angefahrene Stellung halten zu können.

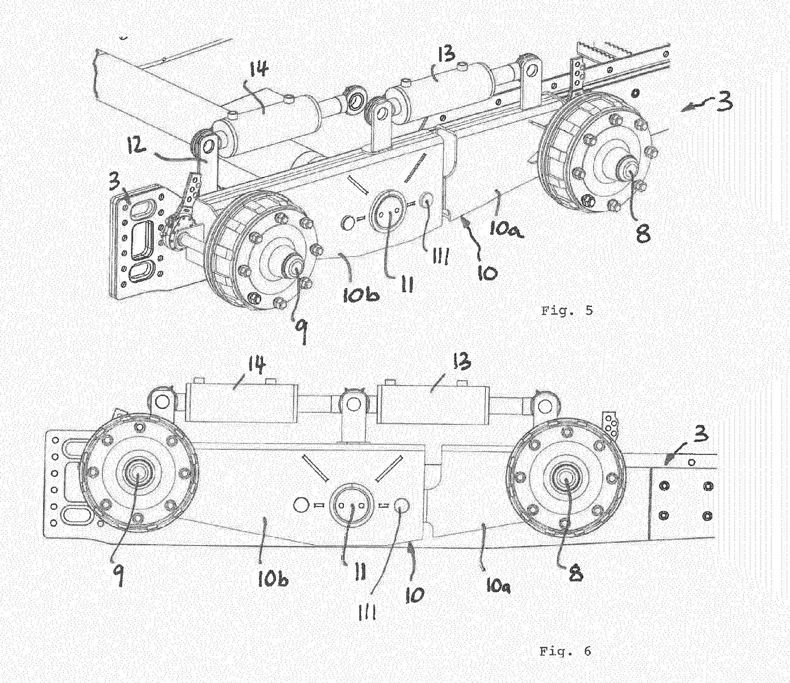

Eine weitere Ausführungsform ist in den Figuren 5 und 6 gezeigt, die hinsichtlich der Ausbildung der Radachsen 8 und 9, des Achsträgers 10 bzw. dessen Achsträgerteile 10a und 10b und der Schwenkbarkeit zum Maschinenrahmen um die Schwenkachse 11 sowie der Schwenkbarkeit zueinander um die Schwenkachse 111 im Wesentlichen der zuvor beschriebenen Ausführung nach den Fig. 1 bis 4 entspricht. Wesentlicher Unterschied zu den zuvor beschriebenen Ausführungen ist die Anordnung der Druckmittelaktoren 13 und 14.

Wie die Figuren 5 und 6 zeigen, besitzt nur einer der Druckmittelaktoren einen Anlenkpunkt am Schwenkachsträger 12 bzw. an einem maschinenrahmenfesten Rahmenelement, während der andere Druckmittelaktor an den Achsträgerteilen 10a und 10b angelenkt ist.

Insbesondere kann ein erster Druckmittelaktor 13 einerseits gelenkig an dem einen Achsträgerteil 10a und gelenkig an dem anderen Achsträgerteil 10b angelenkt sein, wobei die Anlenkpunkte jeweils von der Schwenkachse 111 beabstandet sind, um einen Hebelarm bezüglich der genannten Schwenkachse 111 aufzuweisen und die beiden Achsträgerteile 10a und 10b relativ zueinander verschwenken zu können.

Der andere, zweite Druckmittelaktor 14 ist einerseits an einem der Achsträger 10b und andererseits an dem Schwenkachsträger 12 bzw. einem rahmenfesten Träger angelenkt. Wie die Figuren 5 und 6 zeigen, kann der achsträgerseitliche Anlenkpunkt des zweiten Druckmittelaktors 14 mit dem Anlenkpunkt des ersten Druckmittelaktors 13 an diesem Achsträger 10a zusammengefasst sein.

Wie die Figuren 5 und 6 zeigen, können auch bei dieser Ausführung die beiden Druckmittelaktoren 13 und 14 auf derselben Seite des Achsträgers 10 angeordnet sein, insbesondere oberhalb des Achsträgers 10.

Der erste Druckmittelaktor 13, der an beiden Achsträgerteilen 10a und 10b angelenkt ist, kann zur Höheneinstellung verwendet werden. Durch Aus- und Einfahren des ersten Druckmittelaktors 13 können die Achsträgerteile 10a und 10b relativ zueinander verschwenkt werden, wie dies zuvor durch Vergleich der Figuren 1 und 2 verdeutlicht wurde. Um eine bestimmte Relativ-Schwenkstellung der beiden Achsträgerteile 10a und 10b einzufrieren, kann der Druckmittelaktor 13 abgesperrt bzw. verriegelt werden.

Durch den anderen Druckmittelaktor 14 kann die Schwenkstellung des gesamten Achsträgers 10 bezüglich der Schwenkachse 11 gesteuert werden. Soll der Achsträger 10 im Bogey-Modus auf und nieder wippen, kann der Druckmittelaktor 14 von der Druckquelle und dem Rücklauf abgesperrt und/oder in Schwimmstellung geschaltet werden, sodass er sich vom Strömungswiderstand abgesehen frei hin und her bewegen kann.

Die Druckmittelsteuervorrichtung 15 kann den Druckmittelaktor 14 im Wipp-Betriebsmodus entsprechend schalten, insbesondere die gegenläufigen Drucckammern des Druckmittelaktors 14 miteinander verbinden, wenn die Druckkammern vom Verdrängungsvolumen her gleich groß sind, oder aber auch über einen Ausgleichszylinder miteinander verbinden oder aber auch so mit Rücklauf und Fluidversorgung verbinden, dass ein freies Bewegen möglich ist.

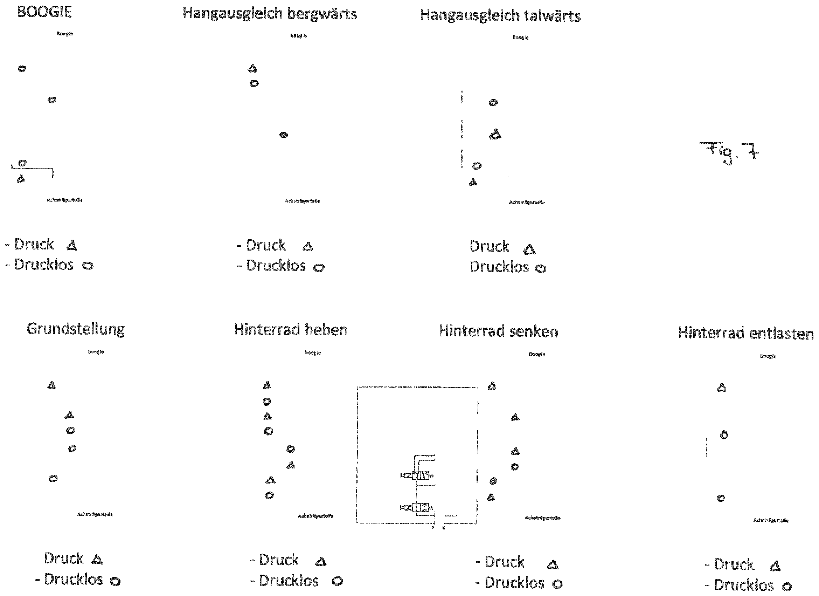

Wie Figur 7 zeigt, können die beiden Druckmittelaktoren 13 und 14 vorteilhafterweise jeweils als Doppelzylinder ausgebildet sein, wobei auf einer gemeinsamen Kolbenstange zwei Kolben befestigt sein können, die in jeweils einem separaten Zylinder verschieblich aufgenommen sind und dort zwei Druckkammern voneinander trennen, sodass jeder der separaten Zylinder doppeltwirkend ausgebildet ist. Solche Doppelzylinder können nicht nur bei der Ausführung nach den Figuren 5 und 6 sinnvoll sein, sondern auch bei der zuvor erläuterten Ausführung nach den Figuren 1 bis 4 Verwendung finden.

Wie Figur 7 weiterhin zeigt, kann die Druckmittelsteuervorrichtung 15 mehrere Mehrwegeschaltventile umfassen, mittels derer die Druckkammern der Druckmittelzylinder 13 und 14 wahlweise von einer Druckquelle her mit Druck beaufschlagt, auf den Tank drucklos geschaltet und miteinander verbunden bzw. "kurzgeschlossen" werden können, um einander gegenläufig zu befüllen bzw. zu entleeren.

Wie beispielsweise die Teilansicht "Boogie" der Figur 7 zeigt, kann im Boogie-Betrieb der den Achsträger zum Maschinenrahmen steuernde Druckmittelaktor 14 mit allen Kammern drucklos geschaltet sein, um ein Hin- und Herwippen des Achsträgers zu ermöglichen, während der die Relativbewegung steuernde Druckmittelaktor 13 in zumindest zwei der vier Kammern druckbeschaltet sein kann, um eine Mittelstellung zu halten, in der die beiden Achsträgerteile zueinander eine Mittelstellung, beispielsweise etwa die in den Figuren gezeigte 180°-Stellung einnehmen können.

Dabei sind in Fig. 7 drucklose Leitungen bzw. Kammern mit "○" gekennzeichnet, während druckbeaufschlagte Leitungen/Kammern mit "Δ" gekennzeichnet sind.

Soll ein Hangausgleich bergwärts erfolgen, kann die Drucksteuervorrichtung 15 die Ventile so schalten, dass der die Relativbewegung steuernde Druckmittelaktor 13 so druckbeaufschlagt wird, dass er zusammenfährt und dementsprechend die beiden Achsträgerteile nach oben schwenken. Der andere Druckmittelaktor 14, der die absolute Winkelstellung steuert, kann mit einem Zylinderteil drucklos geschaltet sein und mit dem anderen Zylinder in der verlängernden Kammer druckbeaufschlagt sein, um eine Mittelstellung einzunehmen. Soll indes ein Hangausgleich talwärts erfolgen, kann der Druckmittelaktor 13 in seinen beiden verlängernden Kammern druckbeaufschlagt werden, um die beiden Achsträgerteile zueinander nach unten zu überstrecken, während der absolute Druckmittelzylinder 14 drucklos geschaltet sein kann.

Wie eingangs schon erläutert, kann die Druckmittelsteuervorrichtung 15 auch einen Kurvensteuermodus umfassen, in welchem die hintere Bogey-Achse 9 entlastet oder angehoben wird. In diesem Betriebsmodus kann zum einen der die absolute Winkelstellung zum Maschinenrahmen steuernde Druckmittelaktor 14 druckbeaufschlagt werden, um eine bestimmte Stellung zu halten, während in dem Doppelzylinder 13, der die Achsträgerteile zueinander steuert, zumindest eine Druckkammer, die ein Einfahren bewirkt (Entlastungsmodus) oder beide Kammern, die ein Einfahren bewirken (Hebemodus) druckbeaufschlagt werden können, wie dies in den der unteren Reihe der Teilansichten der Figur 7 die zweite und vierte Darstellung zeigen.

Soll indes beispielsweise in einem Ballen-Übergabemodus die hintere Bogey-Achse 8 belastet werden und das Hinterrad dementsprechend abgesenkt werden, kann der Relativzylinder 13 in beiden Kammern, die eine Verlängerung des Doppelzylinders bewirken, Druck beaufschlagt werden, sodass der hintere Achsträgerteil 10a nach unten gefahren wird. Der vordere Achsträgerteil 10b wird durch ein Einfrieren des Druckmittelaktors 14 in einer vorbestimmten Stellung gehalten, beispielsweise durch Druckbeaufschlagung einer ausfahrenden Druckkammer und einer einfahrenden Druckkammer des Doppelzylinders, wie dies die dritte Darstellung in der unteren Reihe der Teilansichten der Figur 7 zeigt.

Um im Stellbetriebsmodus der Druckmittelsteuervorrichtung 15 eine bestimmte Stellung anzufahren, wird prinzipiell der Druckmittelaktor 14 mit der Druckquelle bzw. dem Rücklauf verbunden, bis die gewünschte Stellung angefahren ist, woraufhin der Druckmittelaktor 14 verriegelt werden kann, beispielsweise durch Sperren eines Schaltventils. Dabei kann auch der andere Druckmittelaktor 13 durch Verbinden mit der Druckquelle und/oder dem Rücklauf in eine korrespondierende, gewünschte Stellung verfahren und dann verriegelt werden, um eine bestimmte Stellung der beiden Radachsen zu erzwingen und zu halten.

## Patentansprüche

1. Landwirtschaftliche Ernte- und/oder Bodenbearbeitungsmaschine mit einem Maschinenrahmen (2), der durch zumindest ein Bogey-Fahrwerk (3) am Boden abgestützt ist, das zwei jeweils an einem Achsträger (10) befestigte Radachsen (8, 9) aufweist, der mit den daran befestigten Radachsen (8,9) nach Art einer Wippe um eine Schwenkachse (11) schwenkbar gelagert ist, wobei der genannte Achsträger (10) zur Höhenverstellung des Bogey-Fahrwerks (3) in zumindest zwei Achsträgerteile (10a, 10b) geteilt ist, die relativ zueinander schwenkbar sind, wobei zumindest zwei Druckmittelaktoren (13, 14) zum Einstellen der Relativstellung der Achsträgerteile (10a, 10b) zueinander vorgesehen sind, **dadurch gekennzeichnet, dass** die zwei Druckmittelaktoren (13, 14) zum Einstellen einer festen, vorgebbaren Winkelstellung des Achsträgers (10) bezüglich der Schwenkachse (11) und Einfrieren der eingestellten Winkelstellung des Achsträgeres (10) relativ zum Maschinenrahmen (2) vorgesehen sind.

2. Landwirtschaftliche Ernte- und/oder Bodenbearbeitungsmaschine nach dem vorhergehenden Anspruch, wobei die genannten zumindest zwei Druckmittelaktoren (13, 14) jeweils einerseits an einem der Achsträgerteile (10a, 10b) und andererseits an einem Schwenkachsträger (12), gegenüber dem das Bogey-Fahrwerk (3) wippbar ist, angelenkt sind, wobei eine Druckmittelsteuervorrichtung (15) zum Ansteuern der Druckmittelaktoren (13, 14) vorgesehen ist, die einen Wipp-Betriebsmodus, in dem die Druckmittelaktoren (13, 14) kurzgeschlossen sind, derart, dass beim Aufwippen eines Achsträgerteils aus dem damit verbundenen Druckmittelaktor verdrängtes Druckfluid eine Stellbewegung des anderen Druckmittelaktors zum Niederwippen des damit verbundenen Achsträgerteils erzwingt, und einen Stellbetriebsmodus aufweist, in dem zumindest einer der Druckmittelaktoren (13, 14) mit einer Druckquelle und/oder einem Rücklauf verbunden und in eine vorbestimmten Stellung fahrbar und feststellbar ist.

3. Landwirtschaftliche Ernte- und/oder Bodenbearbeitungsmaschine nach dem vorhergehenden Anspruch, wobei im genannten Wipp-Betriebsmodus die beiden Druckmittelzylinder (13, 14) kreuzweise kurzgeschlossen sind, sodass sie sich durch Druckmittelverdrängung gegenläufig verstellen, wobei ein Ausfahren des einen Druckmittelaktors ein Einfahren des anderen Druckmittelaktors und umgekehrt erzwingt, wobei die im Wipp-Betriebsmodus kurzgeschlossenen Druckmittelaktoren (13, 14) einander zumindest näherungsweise entsprechende Verdrängungsvolumina haben und/oder über einen Ausgleichszylinder indirekt miteinander gekoppelt sind derart, dass die kurzgeschlossenen Druckmittelaktoren betragsmäßig zumindest im Wesentlichen einander entsprechende Stellbewegungen ausführen.

4. Landwirtschaftliche Ernte- und/oder Bodenbearbeitungsmaschine nach einem der vorhergehenden Ansprüche, wobei die Druckmittelsteuervorrichtung (15) eine Ventilanordnung (16) zum wahlweisen Verbinden der Druckmittelaktoren (13, 14) mit einer Druckquelle, mit einem Rücklauf und miteinander aufweist, wobei die Ventilanordnung (16) zusätzlich dazu konfiguriert ist, die Druckmittelaktoren (13, 14) abzusperren und/oder zu verriegeln.

5. Landwirtschaftliche Ernte- und/oder Bodenbearbeitungsmaschine nach einem der vorhergehenden Ansprüche, wobei die zumindest zwei, vorzugsweise alle, Druckmittelaktoren (13, 14) auf derselben Seite des Achsträgers (10), insbesondere oberhalb des Achsträgers (10), angeordnet sind.

6. Landwirtschaftliche Ernte- und/oder Bodenbearbeitungsmaschine nach einem der vorhergehenden Ansprüche, wobei zumindest zwei weitere Druckmittelaktoren (17, 18) vorgesehen sind, sodass insgesamt zumindest vier Druckmittelaktoren (13, 14; 17, 18), die paarweise miteinander gekoppelt und jeweils hintereinander geschaltet sind, sodass Stellbewegungen der zumindest zwei weiteren Druckmittelaktoren (17, 18) Stellbewegungen der erstgenannten Druckmittelaktoren (13, 14) und damit Stellbewegungen der daran angebundenen Achsträgerteile (10a, 10b) erzwingen, wobei die genannten weiteren Druckmittelaktoren (17, 18) insbesondere dazu vorgesehen sind, Anlenkpunkte der damit gekoppelten Druckmittelaktoren (13, 14) zu verstellen.

7. Landwirtschaftliche Ernte- und/oder Bodenbearbeitungsmaschine nach dem vorhergehenden Anspruch, wobei ein Paar an dem Schwenkachsträger (12) beweglich gelagerte Übertrager (19), insbesondere schwenkbare Übertragerhebel, vorgesehen sind, wobei an jedem Übertrager (19) einerseits einer der erstgenannten Druckmittelaktoren (13, 14) angelenkt und einer der weiteren Druckmittelaktoren (17, 18) angelenkt ist.

8. Landwirtschaftliche Ernte- und/oder Bodenbearbeitungsmaschine nach einem der beiden vorhergehenden Ansprüche, wobei im Wipp-Betriebsmodus der Druckmittelsteuervorrichtung (15) die weiteren Druckmittelaktoren (17, 18) paarweise mit den erstgenannten Druckmittelaktoren (13, 14) kurzgeschlossen sind, wobei jeweils ein Paar Druckmittelaktoren (13, 18; 14, 17) miteinander kurzgeschlossen ist, die nicht über den Übertrager (19) miteinander gekoppelt sind.

9. Landwirtschaftliche Ernte- und/oder Bodenbearbeitungsmaschine nach Anspruch 1, wobei einer der zumindest zwei Druckmittelaktoren (13) an jedem der beiden Achsträgerteile (10a, 10b) angelenkt ist derart, dass ein Verstellen des Druckmittelaktors (13) ein Verschwenken der beiden Achsträgerteile (10a, 10b) relativ zueinander bewirkt, und ein zweiter der zumindest zwei Druckmittelaktoren (14) einerseits an einem der beiden Achsträgerteile (10b) und andererseits an einem Schwenkachsträger (12) und/oder einem maschinenrahmenfesten Anlenkträger angelenkt ist und somit zum Einstellen der Winkelstellung des Achsträgers (10) bezüglich der Schwenkachse (11) relativ zum Maschinenrahmen (2) vorgesehen ist.

10. Landwirtschaftliche Ernte- und/oder Bodenbearbeitungsmaschine nach dem vorhergehenden Anspruch, wobei die Druckmittelsteuervorrichtung (15) zum Ansteuern der Druckmittelaktoren (13, 14) dazu konfiguriert ist, im Wipp-Betriebsmodus den Druckmittelaktor (14), der am Schwenkachsträger (12) oder dem maschinenrahmenfesten Anlenkträger angelenkt ist, in Schwimmstellung zu schalten, und im Stellbetriebsmodus beide Druckmittelaktoren (13, 14) in eine vorbestimmte Stellung zu verfahren und zu verriegeln.

11. Landwirtschaftliche Ernte- und/oder Bodenbearbeitungsmaschine nach einem der vorhergehenden Ansprüche, wobei die zumindest zwei Druckmittelaktoren (13, 14) jeweils als Doppelzylinder ausgebildet sind, wobei insbesondere eine Kolbenstange (2) daran befestigte Kolben aufweist, die in separaten Zylinderteilen jeweils verschieblich aufgenommen sind und jeweils zwei Druckkammern begrenzen und/oder jeweils zweiseitig beaufschlagbar sind.

12. Landwirtschaftliche Ernte- und/oder Bodenbearbeitungsmaschine nach einem der vorhergehenden Ansprüche, wobei die Druckmittelsteuervorrichtung (15) einen Kurvenbetriebsmodus aufweist, in dem die zumindest zwei Druckmittelaktoren (13, 14) derart druckbeaufschlagt werden, dass eine der beiden Radachsen (8, 9) des Bogey-Fahrwerks 3, insbesondere eine hintere Radachse (8), bei Kurvenfahrten entlastet und/oder angehoben wird, wobei die Druckmittelsteuervorrichtung (15) vorzugsweise dazu ausgebildet ist, in Abhängigkeit eines Kurvenlenksignals, das einen Lenkeinschlag eines Schleppers und/oder einen Einlenkwinkel einer Deichsel angibt, zu arbeiten und eine der beiden Radachsen (8, 9) zu entlasten.

13. Landwirtschaftliche Ernte- und/oder Bodenbearbeitungsmaschine nach einem der vorhergehenden Ansprüche, wobei die Drucksteuervorrichtung (15) einen Ballenübergabe-Betriebsmodus aufweist, in dem eine hintere Radachse (8) des Bogey-Fahrwerks (3) belastet und/oder eine vordere Radachse (9) des Bogey-Fahrwerks (3) entlastet wird, wenn ein Erntegutballen aus einer Ballenformkammer an einen Wickler (7) übergeben wird.

14. Landwirtschaftliche Ernte- und/oder Bodenbearbeitungsmaschine nach einem der vorhergehenden Ansprüche, wobei eine Wiegevorrichtung zum Erfassen der Beladung vorgesehen ist, die eine Druckerfassungseinrichtung zum Erfassen des Druckmitteldrucks in zumindest einem der Druckmittelaktoren (13, 14), der zum Einstellen der Relativstellung der Achsträgerteile (10a, 10b) zueinander vorgesehen ist, aufweist und die Beladung und/oder das Maschinengewicht in Abhängigkeit des erfassten Druckmitteldrucks bestimmt.

15. Landwirtschaftliche Ernte- und/oder Bodenbearbeitungsmaschine nach einem der vorhergehenden Ansprüche, wobei zumindest einer der Druckmittelaktoren (13, 14), der zum Einstellen der Relativstellung der Achsträgerteile zueinander vorgesehen ist, im Fahrbetrieb mit einem Druckspeicher zur Dämpfung von Fahrbahnstößen verbunden ist.

## Claims

1. Agricultural harvesting and/or soil working machine with a machine frame (2), which is supported on the ground by at least one bogey chassis (3), which comprises two wheel axles (8, 9) attached respectively to an axle carrier (10), which is supported, together with the wheel axles (8, 9) attached thereto, pivotably about a pivot axis (11) in the manner of a rocker, wherein to adjust the height of the bogey chassis (3), said axle carrier (10) is divided into at least two axle carrier parts (10a, 10b), which are pivotable relative to one another, wherein at least two pressure medium actuators (13, 14) are provided for adjusting the relative position of the axle carrier parts (10a, 10b) to one another, **characterised in that** the two pressure medium actuators (13, 14) are provided for adjusting a fixed, predeterminable angular position of the axle carrier (10) with respect to the pivot axis (11) and for freezing the set angular position of the axle carrier (10) relative to the machine frame (2).

2. Agricultural harvesting and/or soil working machine according to the preceding claim, wherein said at least two pressure medium actuators (13, 14) are respectively articulated to one of the axle carrier parts (10a, 10b) on the one hand and on the other hand to a pivoting axle carrier (12), relative to which the bogey chassis (3) can seesaw, wherein a pressure medium control device (15) is provided for controlling the pressure medium actuators (13, 14) and has a rocker operating mode, in which the pressure medium actuators (13, 14) are short-circuited such that during seesawing up of one axle carrier part, pressure fluid displaced from the pressure medium actuator connected thereto forces a setting movement of the other pressure medium actuator to seesaw down the axle carrier part connected thereto, and has a setting operating mode, in which at least one of the pressure medium actuators (13, 14) is connected to a pressure source and/or a return line and can be moved to and fixed in a predetermined position.

3. Agricultural harvesting and/or soil working machine according to the preceding claim, wherein in said rocker operating mode, the two pressure medium cylinders (13, 14) are short-circuited crosswise so that they are reciprocally adjusted by pressure medium displacement, wherein extension of one pressure medium actuator forces retraction of the other pressure medium actuator and vice versa, wherein the pressure medium actuators (13, 14) short-circuited in the rocker operating mode have displacement volumes corresponding at least approximately to one another and/or are coupled indirectly to one another via a balancing cylinder, so that the short-circuited pressure medium actuators execute setting movements at least substantially corresponding to one another in terms of amount.

4. Agricultural harvesting and/or soil working machine according to any one of the preceding claims, wherein the pressure medium control device (15) has a valve arrangement (16) for optional connection of the pressure medium actuators (13, 14) to a pressure source, to a return line and to one another, wherein the valve arrangement (16) is additionally configured to shut off and/or lock the pressure medium actuators (13, 14).

5. Agricultural harvesting and/or soil working machine according to any one of the preceding claims, wherein the at least two, preferably all, pressure medium actuators (13, 14) are arranged on the same side of the axle carrier (10), in particular above the axle carrier (10).

6. Agricultural harvesting and/or soil working machine according to any one of the preceding claims, wherein at least two further pressure medium actuators (17, 18) are provided, so that in total at least four pressure medium actuators (13, 14; 17, 18), which are coupled to one another in pairs and connected respectively behind one another, so that setting movements of the at least two further pressure medium actuators (17, 18) force setting movements of the first-named pressure medium actuators (13, 14) and thus setting movements of the axle carrier parts (10a, 10b) connected thereto, wherein said further pressure medium actuators (17, 18) are provided in particular to adjust articulation points of the pressure medium actuators (13, 14) coupled thereto.

7. Agricultural harvesting and/or soil working machine according to the preceding claim, wherein a pair of transformers (19), in particular pivotable transformer levers, are provided supported movably on the pivoting axle carrier (12), wherein one of the first-named pressure medium actuators (13, 14) on the one hand and one of the further pressure medium actuators (17, 18) is articulated to each transformer (19).

8. Agricultural harvesting and/or soil working machine according to one of the two preceding claims, wherein in rocker operating mode of the pressure medium control device (15), the further pressure medium actuators (17, 18) are short-circuited in pairs to the first-named pressure medium actuators (13, 14), wherein one pair of the pressure medium actuators (13, 18; 14, 17) that are not coupled to one another via the transformer (19) is respectively short-circuited to one another.

9. Agricultural harvesting and/or soil working machine according to claim 1, wherein one of the at least two pressure medium actuators (13) is articulated to each of the two axle carrier parts (10a, 10b) so that adjustment of the pressure medium actuator (13) causes pivoting of the two axle carrier parts (10a, 10b) relative to one another, and a second of the at least two pressure medium actuators (14) is articulated to one of the two axle carrier parts (10b) on the one hand and to a pivoting axle carrier (12) and/or a hinge carrier fixed to the machine frame on the other hand and is thus provided for adjusting the angular position of the axle carrier (10) with regard to the pivot axis (11) relative to the machine frame (2).

10. Agricultural harvesting and/or soil working machine according to the preceding claim, wherein the pressure medium control device (15) for controlling the pressure medium actuators (13, 14) is configured to switch the pressure medium actuator (14), which is articulated on the pivoting axle carrier (12) or the hinge carrier fixed on the machine frame, to a floating position in rocker operating mode, and to move both pressure medium actuators (13, 14) to a predetermined position and lock them in setting operating mode.

11. Agricultural harvesting and/or soil working machine according to any one of the preceding claims, wherein the at least two pressure medium actuators (13, 14) are each formed as double cylinders, wherein in particular a piston rod (2) has pistons attached thereto that are each received movably in separate cylinder parts and each delimit two pressure chambers and/or can each be loaded in both directions.

12. Agricultural harvesting and/or soil working machine according to any one of the preceding claims, wherein the pressure medium control device (15) has a curve operating mode, in which the at least two pressure medium actuators (13, 14) are pressurised such that one of the two wheel axles (8, 9) of the bogey chassis (3), in particular a rear wheel axle (8), is relieved of load and/or raised when travelling on a curve, wherein the pressure medium control device (15) is preferably formed to work and relieve the load on one of the two wheel axles (8, 9) depending on a curve steering signal, which indicates a steering movement of a tractor and/or a steering angle of a drawbar.

13. Agricultural harvesting and/or soil working machine according to any one of the preceding claims, wherein the pressure medium control device (15) has a bale transfer operating mode, in which a rear wheel axle (8) of the bogey chassis (3) is loaded and/or a front wheel axle (9) of the bogey chassis (3) is relieved of load when a crop bale is transferred from a baling chamber to a wrapper (7).

14. Agricultural harvesting and/or soil working machine according to any one of the preceding claims, wherein a weighing device for detecting the loading is provided, which has a pressure detection device for detecting the pressure medium pressure in at least one of the pressure medium actuators (13, 14) that is provided for adjusting the relative position of the axle carrier parts (10a, 10b) to one another and determines the loading and/or the machine weight depending on the pressure medium pressure detected.

15. Agricultural harvesting and/or soil working machine according to any one of the preceding claims, wherein at least one of the pressure medium actuators (13, 14) provided for adjusting the relative position of the axle carrier parts to one another is connected in driving operation to a pressure accumulator for damping road surface shocks.

## Revendications

1. Moissonneuse et/ou machine de travail du sol agricole avec un châssis de machine (2), qui est soutenu sur le sol par au moins un train de roulement (3), qui présente deux essieux (8, 9) fixés respectivement sur un support d'essieu (10), qui est monté de manière à pouvoir pivoter autour d'un axe de pivotement (11) à la manière d'une bascule avec les essieux (8, 9) qui y sont fixés, dans laquelle ledit support d'essieu (10) est divisé, pour ajuster en hauteur le train de roulement (3), en au moins deux parties de support d'essieu (10a, 10b), qui peuvent pivoter l'une par rapport à l'autre, dans laquelle au moins deux actionneurs à moyen sous pression (13, 14) sont prévus pour régler la position relative des parties de support d'essieu (10a, 10b) l'une par rapport à l'autre, **caractérisée en ce que** les deux actionneurs à moyen sous pression (13, 14) sont prévus pour régler une position angulaire fixe pouvant être spécifiée du support d'essieu (10) par rapport à l'axe de pivotement (11) et pour bloquer la position angulaire réglée du support d'essieu (10) par rapport au châssis de machine (2).

2. Moissonneuse et/ou machine de traitement du sol agricole selon la revendication précédente, dans laquelle lesdits au moins deux actionneurs à moyen sous pression (13, 14) sont articulés respectivement d'une part au niveau d'une des parties de support d'essieu (10a, 10b) et d'autre part au niveau d'un support d'axe de pivotement (12), par rapport auquel le train de roulement (3) peut être basculé, dans laquelle un dispositif de commande de moyen sous pression (15) est prévu pour piloter les actionneurs à moyen sous pression (13, 14), qui présentent un mode de fonctionnement de basculement, dans lequel les actionneurs à moyen sous pression (13, 14) sont court-circuités de telle manière que lors du relèvement par basculement d'une partie de support d'essieu, du fluide sous pression refoulé hors de l'actionneur à moyen sous pression relié à celle-ci produit de manière forcée un mouvement de réglage de l'autre actionneur à moyen sous pression pour abaisser par basculement la partie de support d'essieu reliée à celui-ci, et un mode de fonctionnement de réglage, dans lequel au moins un des actionneurs à moyen sous pression (13, 14) est relié à une source de pression et/ou à un conduit de retour et peut être déplacé et immobilisé dans une position prédéfinie.

3. Moissonneuse et/ou machine de traitement du sol agricole selon la revendication précédente, dans laquelle dans ledit mode de fonctionnement de basculement, les deux vérins à moyen sous pression (13, 14) sont court-circuités de manière croisée de sorte qu'ils s'ajustent en sens inverse par le refoulement du moyen sous pression, dans laquelle une sortie d'un actionneur à moyen sous pression produit de manière forcée une rentrée de l'autre actionneur à moyen sous pression, et inversement, dans laquelle les actionneurs à moyen sous pression (13, 14) court-circuités dans le mode de fonctionnement de basculement ont des volumes de refoulement correspondant au moins approximativement les uns aux autres et/ou sont couplés indirectement les uns aux autres par l'intermédiaire d'un vérin de compensation de telle manière que les actionneurs à moyen sous pression court-circuités exécutent en valeur absolue au moins des mouvements de réglage correspondant sensiblement les uns aux autres.

4. Moissonneuse et/ou machine de traitement du sol agricole selon l'une quelconque des revendications précédentes, dans laquelle le dispositif de commande de moyen sous pression (15) présente un ensemble formant soupape (16) pour relier au choix les actionneurs à moyen sous pression (13, 14) à une source de pression, à un conduit de retour et entre eux, dans laquelle l'ensemble formant soupape (16) est configuré en supplément pour fermer et/ou verrouiller les actionneurs à moyen sous pression (13, 14).

5. Moissonneuse et/ou machine de traitement du sol agricole selon l'une quelconque des revendications précédentes, dans laquelle les au moins deux, de préférence tous les actionneurs à moyen sous pression (13, 14) sont disposés sur le même côté du support d'essieu (10), en particulier au-dessus du support d'essieu (10).

6. Moissonneuse et/ou machine de traitement du sol agricole selon l'une quelconque des revendications précédentes, dans laquelle au moins deux autres actionneurs à moyen sous pression (17, 18) sont prévus de sorte qu'au total au moins quatre actionneurs à moyen sous pression (13, 14 ; 17, 18) sont couplés les uns aux autres par paires et sont branchés les uns après les autres respectivement de sorte que des mouvements de réglage des au moins deux autres actionneurs à moyen sous pression (17, 18) produisent de manière forcée des mouvements de réglage des actionneurs à moyen sous pression (13, 14) évoqués en premier et ainsi des mouvements de réglage des parties de support d'essieu (10a, 10b) rattachées à ceux-ci, dans laquelle lesdits autres actionneurs à moyen sous pression (17, 18) sont prévus en particulier pour ajuster des points d'articulation des actionneurs à moyen sous pression (13, 14) couplés à ceux-ci.

7. Moissonneuse et/ou machine de traitement du sol agricole selon la revendication précédente, dans laquelle une paire de transmetteurs (19) montés de manière mobile au niveau du support d'axe de pivotement (12), en particulier des leviers transmetteurs pouvant pivoter sont prévus, dans laquelle d'une part un des actionneurs à moyen sous pression (13, 14) évoqués en premier d'une part et un des autres actionneurs à moyen sous pression (17, 18) sont articulés au niveau de chaque transmetteur (19).

8. Moissonneuse et/ou machine de traitement du sol agricole selon l'une quelconque des deux revendications précédentes, dans laquelle dans le mode de fonctionnement de basculement du dispositif de commande de moyen sous pression (15), les autres actionneurs à moyen sous pression (17, 18) sont court-circuités par paire avec les actionneurs à moyen sous pression (13, 14) évoqués en premier, dans laquelle respectivement une paire d'actionneurs à moyen sous pression (13, 18 ; 14, 17), qui ne sont pas couplés les uns aux autres par l'intermédiaire du transmetteur (19), est court-circuitée.

9. Moissonneuse et/ou machine de traitement du sol agricole selon la revendication 1, dans laquelle un des au moins deux actionneurs à moyen sous pression (13) est articulé au niveau de chacune des deux parties de support d'essieu (10a, 10b) de telle manière qu'un ajustement de l'actionneur à moyen sous pression (13) entraîne un pivotement des deux parties de support d'essieu (10a, 10b) l'une par rapport à l'autre et un deuxième des au moins deux actionneurs à moyen sous pression (14) est articulé d'une part au niveau d'une des deux parties de support d'essieu (10b) et d'autre part au niveau d'un support d'axe de pivotement (12) et/ou d'un support d'articulation solidaire du châssis de machine et ainsi est prévu pour régler la position angulaire du support d'essieu (10) par rapport à l'axe de pivotement (11) par rapport au châssis de machine (2).

10. Moissonneuse et/ou machine de traitement du sol agricole selon la revendication précédente, dans laquelle le dispositif de commande de moyen sous pression (15) est configuré pour piloter les actionneurs à moyen sous pression (13, 14) pour commuter en position flottante dans le mode de fonctionnement de basculement l'actionneur à moyen sous pression (14), qui est articulé au niveau du support d'axe de pivotement (12) ou du support d'articulation solidaire du châssis de machine et pour déplacer dans une position prédéfinie et verrouiller les deux actionneurs à moyen sous pression (13, 14) dans le mode de fonctionnement de réglage.

11. Moissonneuse et/ou machine de traitement du sol agricole selon l'une quelconque des revendications précédentes, dans laquelle les au moins deux actionneurs à moyen sous pression (13, 14) sont réalisés respectivement en tant que doubles vérins, dans laquelle en particulier une tige de piston (2) présente des pistons fixés au niveau de celle-ci, qui sont logés respectivement de manière à pouvoir coulisser dans des parties de vérin séparées et délimitent respectivement deux chambres de pression et/ou peuvent être soumis à une action respectivement sur deux côtés.

12. Moissonneuse et/ou machine de traitement du sol agricole selon l'une quelconque des revendications précédentes, dans laquelle le dispositif de commande de moyen sous pression (15) présente un mode de fonctionnement en virage, dans lequel les aux moins deux actionneurs à moyen sous pression (13, 14) sont soumis à l'action d'une pression de telle manière qu'un des deux essieux (8, 9) du train de roulement (3), en particulier un essieu arrière (8), est déchargé et/ou relevé lors de la négociation de virages, dans laquelle le dispositif de commande de moyen sous pression (15) est réalisé de préférence pour fonctionner en fonction d'un signal de braquage dans un virage, qui indique un braquage d'un tracteur et/ou un angle de braquage d'une barre de direction et pour décharger un des deux essieux (8, 9).

13. Moissonneuse et/ou machine de traitement du sol agricole selon l'une quelconque des revendications précédentes, dans laquelle le dispositif de commande de pression (15) présente un mode de fonctionnement de transfert de balles, dans lequel un essieu arrière (8) du train de roulement (3) est chargé et/ou un essieu avant (9) du train de roulement (3) est déchargé quand une balle agricole provenant d'une chambre de façonnage de balles est transmise à un enrouleur (7).

14. Moissonneuse et/ou machine de traitement du sol agricole selon l'une quelconque des revendications précédentes, dans laquelle un dispositif de pesage est prévu pour détecter la charge, qui présente un système de détection de pression pour détecter la pression de moyen sous pression dans au moins un des actionneurs à moyen sous pression (13, 14), qui est prévu pour régler la position relative des parties de support d'essieu (10a, 10b) les unes par rapport aux autres et définit le chargement et/ou le poids de machine en fonction de la pression de moyen sous pression détectée.

15. Moissonneuse et/ou machine de traitement du sol agricole selon l'une quelconque des revendications précédentes, dans laquelle au moins un des actionneurs à moyen sous pression (13, 14), qui est prévu pour régler la position relative des parties de support d'essieu les unes par rapport aux autres, est relié lors du mode de déplacement à un accumulateur de pression pour amortir des secousses liées à la chaussée.
